# EUROPEAN PATENT SPECIFICATION

(11) **EP 3 604 010 B1**
(45) Date of publication and mention of the grant of the patent: **07.10.2026**
(21) Application number: 18777420.3
(22) Date of filing: 29.03.2018
(51) Int. Cl.: B60K 6/26, B60W 10/06, B60W 10/08, B60W 10/26, B60K 6/28, B60K 6/387, B60K 6/48, B60K 6/485, B60K 6/547, B60W 20/13, B60W 30/188, B60K 6/448, B60L 58/20, B60K 6/52

(54) **POWER SYSTEM FOR HYBRID ELECTRIC VEHICLE**
ANTRIEBSSYSTEM FÜR HYBRIDELEKTROFAHRZEUG
SYSTÈME DE PROPULSION POUR VÉHICULE ÉLECTRIQUE HYBRIDE

(30) Priority: 31.03.2017 CN 201710210171
(43) Date of publication of application: 05.02.2020
(73) Proprietor: BYD Company Limited, Shenzhen, Guangdong 518118 (CN)
(72) Inventor: YANG, Dongsheng, Shenzhen Guangdong 518118 (CN); WANG, Chunsheng, Shenzhen Guangdong 518118 (CN); BAI, Yunhui, Shenzhen Guangdong 518118 (CN); CHEN, Xinli, Shenzhen Guangdong 518118 (CN)
(74) Representative: Mathys & Squire
(86) International application number: PCT/CN2018/081048
(87) International publication number: WO 2018/177361

(56) References cited:
- EP-A1- 2 740 643
- CN-A- 101 898 557
- CN-A- 102 069 701
- CN-A- 102 358 207
- CN-A- 104 176 044
- CN-A- 105 799 694
- CN-A- 105 922 986
- CN-A- 106 379 313
- DE-A1- 102015 207 616
- JP-B2- 6 003 758
- US-A1- 2016 082 826

## Description

### FIELD

The present invention relates to the field of vehicle technologies, and in particular, to a power system of a hybrid electric vehicle, a hybrid electric vehicle, a power generation control method of a hybrid electric vehicle, and a computer-readable storage medium.

### BACKGROUND

To reduce energy consumption, development and utilization of energy-efficient vehicles have become a trend. As an energy-efficient vehicle, a hybrid vehicle is driven by an engine and/or a motor.

However, in the related art, a motor-generator of a hybrid electric vehicle also serves as a generator while serving as a driving motor. Consequently, a revolution speed of the motor-generator is relatively low during low-speed traveling, and a generating power and generating efficiency of the motor-generator are also very low, and therefore, cannot satisfy a power demand of low-speed traveling. Consequently, it is relatively difficult for a whole vehicle to maintain electric balance at a low speed. Therefore, improvements need to be made to the related art.

EP 2 740 643 A1 describes a hybrid vehicle which is mounted with a traction motor, a power storage device for storing electric power input to and output from the traction motor, an engine, and a power generation mechanism to generate charging electric power for the power storage device by an output from the engine.

DE 10 2015 207616 A1 describes a method for operating a vehicle.

### SUMMARY

An objective of the present invention is to at least resolve one of the technical problems in the related art to some extent. Therefore, an objective of the present invention is to provide a power system of a hybrid electric vehicle, to implement low-speed electric balance of a whole vehicle.

To achieve the foregoing objective, the present invention refers to a power system of a hybrid electric vehicle with the features of independent claim 1, comprising: an engine, configured to output power to a wheel of the hybrid electric vehicle through a clutch; a power motor, configured to output driving power to a wheel of the hybrid electric vehicle; a power battery, configured to supply power to the power motor; a DC-DC converter; a secondary motor, connected to the engine, where the secondary motor is connected to the power motor, the DC-DC converter, and the power battery separately, and the secondary motor is driven by the engine to generate power; and a control module, configured to obtain an SOC value of the power battery and a vehicle speed of the hybrid electric vehicle, and control, according to the SOC value of the power battery and the vehicle speed of the hybrid electric vehicle, the secondary motor to enter a generating power adjustment mode, to enable the engine to operate in a preset optimal economic zone.

According to the power system of a hybrid electric vehicle provided by the invention, low-speed electric balance and low-speed smoothness of the whole vehicle can be maintained, and performance of the whole vehicle can be improved.

### BRIEF DESCRIPTION OF THE DRAWINGS

Fig. 1 is a schematic block diagram of a power system of a hybrid power vehicle according to an embodiment of the present invention;
Fig. 1a is a schematic engine universal characteristic curve diagram according to an embodiment of the present invention;
Fig. 2a is a schematic structural diagram of a power system of a hybrid power vehicle according to an embodiment of the present invention;
Fig. 2b is a schematic structural diagram of a power system of a hybrid power vehicle according to another embodiment of the present invention;
Fig. 3 is a schematic block diagram of a power system of a hybrid power vehicle according to an embodiment of the present invention;
Fig. 4 is a schematic diagram of a transmission structure between an engine and a corresponding wheel according to an embodiment of the present invention;
Fig. 5 is a schematic diagram of a transmission structure between an engine and a corresponding wheel according to another embodiment of the present invention;
Fig. 6 is a schematic block diagram of a hybrid power vehicle according to an embodiment of the present invention;
Fig. 7 is a flowchart of a power generation control method of a hybrid power vehicle according to an embodiment of the present invention;
Fig. 8 is a flowchart of a power generation control method of a hybrid power vehicle according to an embodiment of the present invention;
Fig. 9 is a flowchart of a power generation control method of a hybrid power vehicle according to another embodiment of the present invention;
Fig. 10 is a flowchart of a power generation control method of a hybrid power vehicle according to another embodiment of the present invention;
Fig. 11 is a flowchart of a power generation control method of a hybrid power vehicle according to another embodiment of the present invention; and
Fig. 12 is a flowchart of a power generation control method of a hybrid power vehicle according to a specific embodiment of the present invention.

### DETAILED DESCRIPTION

The following describes in detail embodiments of the present invention. Examples of the embodiments are shown in the accompanying drawings, where reference signs that are the same or similar from beginning to end represent same or similar components or components that have same or similar functions. The following embodiments described with reference to the accompanying drawings are exemplary, and are intended to describe the present invention and cannot be construed as a limitation to the present invention.

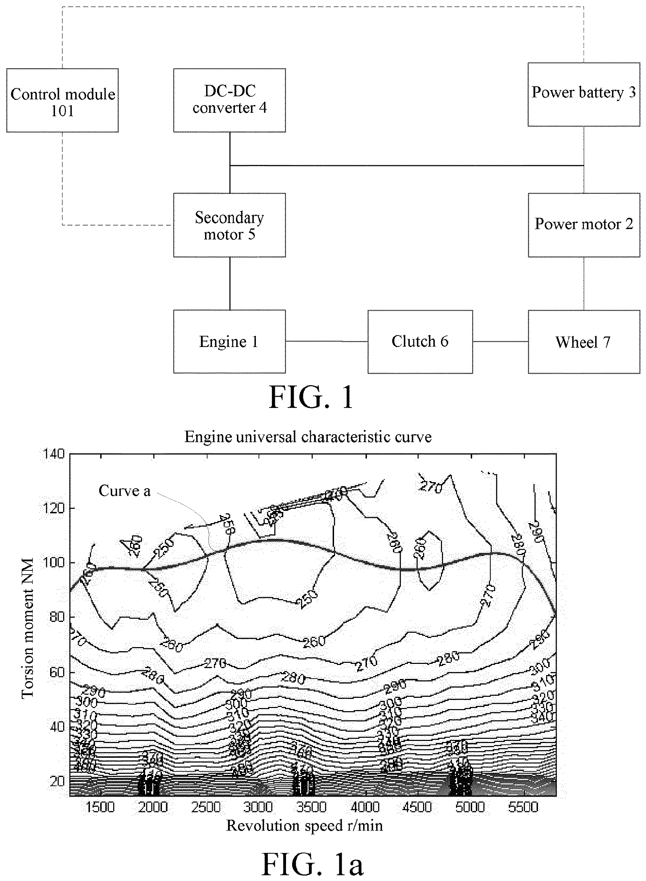

A power system of a hybrid electric vehicle provided in an embodiment of a first aspect of the present invention is described below with reference to Figs. 1 to 5. The power system provides sufficient power and electric energy for normal running of the hybrid electric vehicle.

Fig. 1 is a schematic block diagram of a power system of a hybrid power vehicle according to an embodiment of the present invention. As shown in Fig. 1, the power system of the hybrid electric vehicle includes: an engine 1, a power motor 2, a power battery 3, a DC-DC converter 4, a secondary motor 5, and a master controller 101.

According to a specific embodiment of the present invention, the hybrid electric vehicle may be a Plug-in Hybrid Electric Vehicle (PHEV).

As shown in Fig. 1 to Fig. 3, the engine 1 is configured to output power to a wheel 7 of the hybrid electric vehicle through a clutch 6; and the power motor 2 is configured to output driving power to a wheel 7 of the hybrid electric vehicle. That is, the power system in this embodiment of the present invention can provide power for normally running of the hybrid electric vehicle through the engine 1 and/or the power motor 2. In some embodiments of the present invention, a power source of the power system may be the engine 1 and the power motor 2. That is, either of the engine 1 and power motor 2 can individually output power to the wheel 7, or the engine 1 and the power motor 2 can output power to the wheel 7 together.

The power battery 3 is configured to supply power to the power motor 2. The secondary motor 5 is connected to the engine 1. For example, the secondary motor 5 may be connected to the engine 1 through a wheel-train end of the engine 1, and the secondary motor 5 is connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4. In other words, the engine 1 may actuate the secondary motor 5 to generate power, and electric energy generated by the secondary motor 5 may be provided to at least one of the power battery 3, the power motor 2, and the DC-DC converter 4. It should be understood that the engine 1 may actuate the secondary motor 5 to generate power while outputting power to the wheel 7, or may separately actuate the secondary motor 5 to generate power.

Therefore, the power motor 2 and the secondary motor 5 respectively and correspondingly serve as a driving motor and a generator. Because the secondary motor 5 has a relatively high generating power and relatively high generating efficiency at a low speed, can satisfy a power demand of low-speed traveling, maintain low-speed electric balance and low-speed smoothness of the whole vehicle, and improve performance of the whole vehicle.

In some embodiments, the secondary motor 5 may be a Belt-driven Starter Generator (BSG) motor. It should be noted that the secondary motor 5 is a high-voltage motor. For example, a generating voltage of the secondary motor 5 is equivalent to a voltage of the power battery 3, so that the electric energy generated by the secondary motor 5 can be directly used to charge the power battery 3 without being subjected to voltage conversion, or may be directly supplied to the power motor 2 and/or the DC-DC converter 4. In addition, the secondary motor 5 is also a high-efficiency generator. For example, when the engine 1 actuates the secondary motor 5 at an idle revolution speed to generate power, 97% or above generating efficiency can be achieved, so that normal generating efficiency is improved.

According to the present invention, the secondary motor 5 is configured to start the engine 1. That is, the secondary motor 5 may implement a function of starting the engine 1. For example, when starting the engine 1, the secondary motor 5 may a crankshaft of the actuate engine 1 to rotate, to enable a piston of the engine 1 to arrive at an ignition position, so as to start the engine 1. Therefore, the secondary motor 5 may implement a function of a starter in the related art.

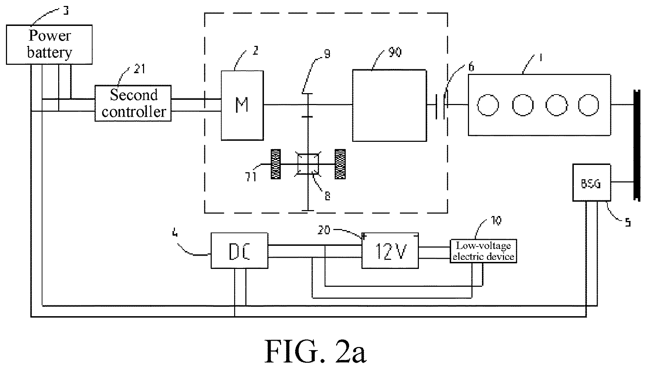

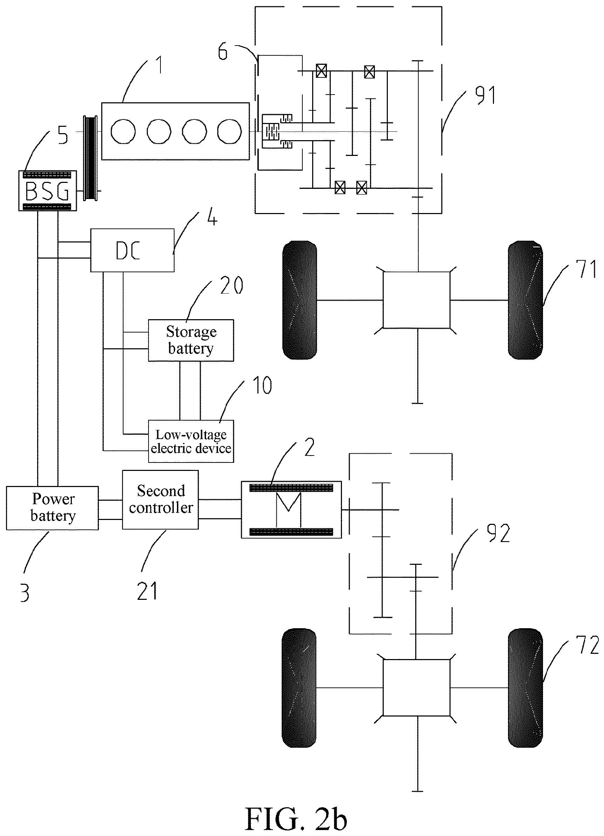

As stated above, the engine 1 and the power motor 2 can both be configured to drive the wheel 7 of the hybrid electric vehicle. For example, as shown in Fig. 2a, the engine 1 and the power motor 2 drive a same wheel, for example, a pair of front wheels 71 (including a left front wheel and a right front wheel), of the hybrid power vehicle together. For another example, as shown in Fig. 2b, the engine 1 may drive a first wheel, for example, the pair of front wheels 71 (including a left front wheel and a right front wheel), of the hybrid power vehicle, and the power motor 2 may output driving power to a second wheel, for example, a pair of rear wheels 72 (including a left rear wheel and a right rear wheel), of the hybrid power vehicle.

In other words, when the engine 1 and the power motor 2 drive the pair of front wheels 71 together, overall driving power of the power system is output to the pair of front wheels 71, and the whole vehicle may use a two wheel drive mode; and when the engine 1 drives the pair of front wheels 71 and the power motor 2 drive the pair of rear wheels 72, driving power of the power system is separately output to the pair of front wheels 71 and the pair of rear wheels 72, and the whole vehicle may use a four wheel drive mode.

Further, when the engine 1 and the power motor 2 drive a same wheel together, with reference to Fig. 2a, the power system of the hybrid electric vehicle further includes a differential 8, a main reducer 9, and a transmission 90. The engine 1 outputs power to the first wheel, for example, the pair of front wheels 71, of the hybrid electric vehicle through the clutch 6, the transmission 90, the main reducer 9, and the differential 8. The power motor 2 outputs driving power to the first wheel, for example, the pair of front wheels 71, of the hybrid electric vehicle through the main reducer 9 and the differential 8. The clutch 6 and the transmission 90 may be integrally disposed.

When the engine 1 drives the first wheel, and the power motor 2 drives the second wheel, with reference to Fig. 2b, the power system of the hybrid electric vehicle further includes a first transmission 91 and a second transmission 92. The engine 1 outputs power to the first wheel, for example, the pair of front wheels 71, of the hybrid electric vehicle through the clutch 6 and the first transmission 91. The power motor 2 outputs driving power to the second wheel, for example, the pair of rear wheels 72, of the hybrid electric vehicle through the second transmission 92. The clutch 6 and the first transmission 91 may be integrally disposed.

Further, in some embodiments of the present invention, as shown in Fig. 1 to Fig. 3, the secondary motor 5 further includes a first controller 51, and the power motor 2 further includes a second controller 21. The secondary motor 5 is connected to the power battery 3 and the DC-DC converter 4 separately through the first controller 51, and is connected to the power motor 2 through the first controller 51 and the second controller 21.

Specifically, the first controller 51 is connected to the second controller 21, the power battery 3, and the DC-DC converter 4 separately. The first controller 51 may include an AC-DC conversion unit. When generating power, the secondary motor 5 may generate an alternating current. The AC-DC conversion unit may convert the alternating current generated by a high-voltage motor 2 during power generation into a high-voltage direct current, for example, a 600 V high-voltage direct current, to perform at least one of charging the power battery 3, supplying power to the power motor 2, and supplying power to the DC-DC converter 4.

Similarly, the second controller 21 may include a DC-AC conversion unit. The first controller 51 may convert an alternating current generated by the secondary motor 5 during power generation into a high-voltage direct current. The DC-AC conversion unit may further convert the high-voltage direct current converted by the first controller 51 to an alternating current, to supply power to the power motor 2.

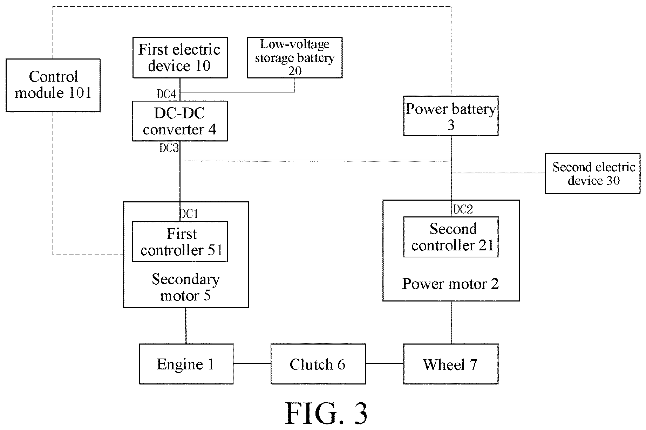

In other words, as shown in Fig. 3, when generating power, the secondary motor 5 may charge the power battery 3 and/or supply power to the DC-DC converter 4 through the first controller 51. That is, secondary motor 5 may implement either or both of charging the power battery 3 and supplying power to the DC-DC converter 4 through the first controller 51. In addition, the secondary motor 5 may further supply power to the power motor 2 through the first controller 51 and the second controller 21.

Further, as shown in Fig. 1 to Fig. 3, the DC-DC converter 4 is further connected to the power battery 3. The DC-DC converter 4 is further connected to the power motor 2 through the second controller 21.

In some embodiments, as shown in Fig. 3, the first controller 51 has a first direct current end DC1, the second controller 21 has a second direct current end DC2, and the DC-DC converter 4 has a third direct current end DC3. The third direct current end DC3 of the DC-DC converter 4 may be connected to the first direct current end DC1 of the first controller 51, to perform DC-DC conversion on the high-voltage direct current output by the first controller 51 through the first direct current end DC1. In addition, the third direct current end DC3 of the DC-DC converter 4 may alternatively be connected to the power battery 3, and further the first direct current end DC1 of the first controller 51 may be connected to the power battery 3, so that the first controller 51 outputs the high-voltage direct current to the power battery 3 through the first direct current end DC1 to charge the power battery 3. Further, the third direct current end DC3 of the DC-DC converter 4 may alternatively be connected to the second direct current end DC2 of the second controller 21, and further, the first direct current end DC1 of the first controller 51 may be connected to the second direct current end DC2 of the second controller 21, so that the first controller 51 outputs the high-voltage direct current to the second controller 21 through the first direct current end DC1 to supply power to the power motor 2.

Further, as shown in Fig. 3, the DC-DC converter 4 is further connected to a first electric device 10 and a low-voltage storage battery 20 in the hybrid electric vehicle to supply power to the first electric device 10 and the low-voltage storage battery 20, and the low-voltage storage battery 20 is further connected to the first electric device 10.

In some embodiments, as shown in Fig. 3, the DC-DC converter 4 further includes a fourth direct current end DC4. The DC-DC converter 4 may convert the high-voltage direct current output by the power battery 3 and/or the high-voltage direct current output by the secondary motor 5 through the first controller 51 into a low-voltage direct current, and output the low-voltage direct current through the fourth direct current end DC4. That is, the DC-DC converter 4 may convert either or both of the high-voltage direct current output by the power battery 3 and the high-voltage direct current output by the secondary motor 5 through the first controller 51 into a low-voltage direct current, and output the low-voltage direct current through the fourth direct current end DC4. Further, the fourth direct current end DC4 of the DC-DC converter 4 may be connected to the first electric device 10, to supply power to the first electric device 10. The first electric device 10 may be a low-voltage electric device, which includes, but is not limited to, a vehicle light, a radio, and the like. The fourth direct current end DC4 of the DC-DC converter 4 may be further connected to the low-voltage storage battery 20, to supply power to the low-voltage storage battery 20.

In addition, the low-voltage storage battery 20 is connected to the first electric device 10, to supply power to the first electric device 10. Particularly, when the secondary motor 5 stops generating power and the power battery 3 is faulty or has an insufficient electricity quantity, the low-voltage storage battery 20 may supply power to the first electric device 10, to ensure low-voltage power usage of the whole vehicle, ensure that the whole vehicle can implement traveling in a pure fuel mode, and increase a traveling distance of the whole vehicle.

As stated above, the third direct current end DC3 of the DC-DC converter 4 is connected to the first controller 51, and the fourth direct current end DC4 of the DC-DC converter 4 is connected to the first electric device 10 and the low-voltage storage battery 20 separately. When the power motor 2, the second controller 21, and the power battery 3 are faulty, the secondary motor 5 may generate power to supply power to the first electric device 10 and/or charge the low-voltage storage battery 20 through the first controller 51 and the DC-DC converter 4, to enable the hybrid electric vehicle to travel in a pure-fuel mode. That is, when the power motor 2, the second controller 21, and the power battery 3 are faulty, the secondary motor 5 may generate power to implement either or both of supplying power to the first electric device 10 and charging the low-voltage storage battery 20 through the first controller 51 and the DC-DC converter 4, so that the hybrid electric vehicle travels in a pure fuel mode.

In other words, when the power motor 2, the second controller 21, and the power battery 3 are faulty, the first controller 51 may convert an alternating current generated by the secondary motor 5 during power generation into a high-voltage direct current, the DC-DC converter 4 may convert the high-voltage direct current converted by the first controller 50 into a low-voltage direct current, to supply power to the first electric device 10 and/or charge low-voltage storage battery 20, that is, implementing either or both of supplying power to the first electric device 10 and charging the low-voltage storage battery 20

Therefore, the secondary motor 5 and the DC-DC converter 4 have a single power supply channel. When the power motor 2, the second controller 21, and the power battery 3 are faulty, electric driving cannot be implemented. In this case, low-voltage power usage of the whole vehicle can be ensured through the single power supply channel of the secondary motor 5 and the DC-DC converter 4, to ensure low-voltage power usage of the whole vehicle, ensure that the whole vehicle can implement traveling in a pure fuel mode, and increase a traveling distance of the whole vehicle.

With reference to the embodiment of Fig. 3, the first controller 51, the second controller 21, and the power battery 3 are further separately connected to a second electric device 30 of the hybrid electric vehicle.

In some embodiments, as shown in Fig. 3, the first direct current end DC1 of the first controller 51 may be connected to the second electric device 30, and when generating power, the secondary motor 5 may directly supply power to the second electric device 30 through the first controller 51. In other words, the AC-DC conversion unit of the first controller 51 may further convert an alternating current generated by the secondary motor 5 during power generation into a high-voltage direct current, and directly supply power to the second electric device 30.

The power battery 3 may be further connected to the second electric device 30, to supply power to the second electric device 30. That is, the high-voltage direct current output by the power battery 3 may be directly supplied to the second electric device 30.

The second electric device 30 may be a high-voltage electric device, which includes, but is not limited to, an air conditioner compressor, a Positive Temperature Coefficient (PTC) heater, and the like.

As stated above, charging the power battery 3, supplying power to the power motor 2, or supplying power to the first electric device 10 and the second electric device 30 may be implemented through power generation of the secondary motor 5. In addition, the power battery 3 may supply power to the power motor 2 through the second controller 21, or supply power to the second electric device 30, or supply power to the first electric device 10 and/or low-voltage storage battery 20 through the DC-DC converter 4. Therefore, power supply modes of the whole vehicle are enriched, power demands of the whole vehicle under different working conditions are satisfied, and performance of the whole vehicle is improved.

It should be noted that in this embodiment of the present invention, a low voltage may refer to a voltage ranging from 12 V (volt) to 24 V, and a high voltage may refer to a voltage of 600 V, but is not limited thereto.

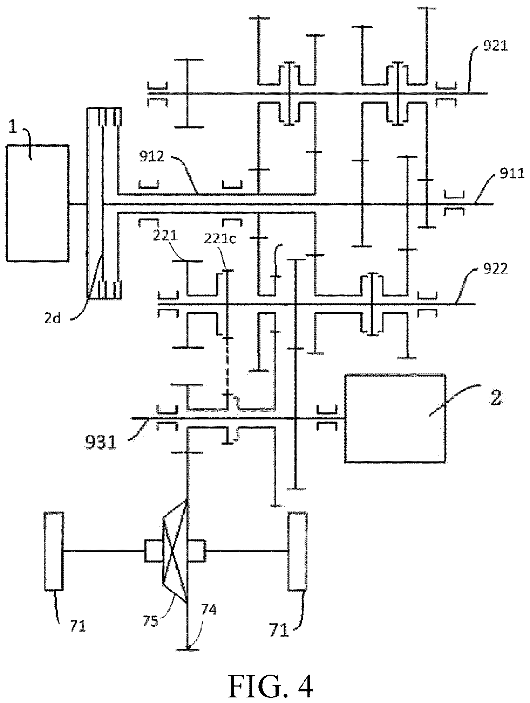

A specific embodiment of a power system of a hybrid electric vehicle is described below in detail with reference to Fig. 4. The embodiment is applicable to a power system in which the engine 1 and the power motor 2 drives a same wheel together, that is, a two-wheel-drive hybrid electric vehicle. It should be noted that this embodiment mainly describes a specific transmission structure among the engine 1, the power motor 2, and the wheel 7, particularly, the structure of the transmission 90 in Fig. 2a. The remaining parts are basically the same as those in the embodiments of Fig. 1 and Fig. 3. Details are not described herein again.

It should be further noted that a plurality of input shafts, a plurality of output shafts, a motor power shaft 931, and relevant gears and gear shift elements on the shafts in the following embodiments may be used to constitute the transmission 90 in Fig. 2a.

In some embodiments, as shown in Fig. 1, Fig. 3, and Fig. 4, the power system of a hybrid electric vehicle mainly includes an engine 1, a power motor 2, a power battery 3, a DC-DC converter 4, a secondary motor 5, a plurality of input shafts (for example, a first input shaft 911 and a second input shaft 912), a plurality of output shafts (for example, a first output shaft 921 and a second output shaft 922), a motor power shaft 931, and relevant gears and gear shift elements (for example, a synchronizer) on the shafts.

As shown in Fig. 4, the engine 1 is configured to output power to a wheel 7 of the hybrid electric vehicle through a clutch 6, for example, a dual-clutch 2d show in Fig. 4. When power is transferred between the engine 1 and the input shaft, the engine 1 is configured to be selectively connected to at least one of a plurality of input shafts through the dual-clutch 2d. In other words, when transmitting power to the input shaft, the engine 1 can be selectively connected to one of the plurality of input shafts, or the engine 1 may be selectively connected two or more of the plurality of input shafts to transmit power.

For example, in the example of Fig. 4, the plurality of input shafts may include two input shafts, namely, a first input shaft 911 and a second input shaft 912. The second input shaft 912 may be coaxially sleeved over the first input shaft 911. The engine 1 can be selectively connected to one of the first input shaft 911 and the second input shaft 912 through the dual-clutch 2d, to transmit power. Alternatively, particularly, the engine 1 may be connected to both of the first input shaft 911 and the second input shaft 912 to transmit power. Certainly, it should be understood that the engine 1 may alternatively be disconnected from both of the first input shaft 911 and the second input shaft 912.

The plurality of output shafts may include two output shafts, namely, a first output shaft 921 and a second output shaft 922, and the first output shaft 921 and the second output shaft 922 are separately disposed in parallel to the first input shaft 911.

Transmission between the input shaft and the output shaft may be performed through a gear-position gear pair. For example, each input shaft is provided with a gear-position driving gear, that is, each of the first input shaft 911 and the second input shaft 912 is provided with a gear-position driving gear. Each output shaft is provided with a gear-position driven gear, that is, each of the first output shaft 921 and the second output shaft 922 is provided with a gear-position driven gear. The gear-position driven gear and the gear-position driving gear are correspondingly engaged with each other, thereby forming a plurality of different gear pairs with different speed ratio.

In some embodiments of the present invention, Six-gear-position transmission may be used between the input shaft and the output shaft, that is, a first-gear-position gear pair, a second-gear-position gear pair, a third-gear-position gear pair, a fourth-gear-position gear pair, a fifth-gear-position gear pair, and a sixth-gear-position gear pair are provided. However, the present invention is not limited to thereto. For a person of ordinary skill in the art, a quantity of gear-position gear pairs may be increased or decreased adaptively according to a transmission demand. This is not limited to the six-gear-position transmission shown in this embodiment of the present invention.

As shown in Fig. 4, the motor power shaft 931 is configured to be in linkage with one of a plurality of output shafts (for example, the first output shaft 921 the second output shaft 922), and through the linkage between the motor power shaft 931 and the output shaft, power may be transferred between the motor power shaft 931 and the output shaft. For example, power transferred through the output shaft (for example, power output from the engine 1) may be output to the motor power shaft 931, or power transferred through the motor power shaft 931 (for example, power output from the power motor 2) may be output to the output shaft.

It should be noted that the foregoing "linkage" may be understood as associated motions of a plurality of (for example, two) components. Using linkage of two components as an example, when one component moves, the other component also moves accordingly.

For example, in some embodiments of the present invention, linkage between a gear and a shaft may be understood as that when the gear rotates, the shaft that is in linkage with the gear also rotates, or when the shaft rotates, the gear that is in linkage with the shaft also rotates.

For another example, linkage between a shaft and a shaft may be understood as that when one shaft rotates, the other shaft that is in linkage with the one shaft also rotates.

For still another example, linkage between a gear and a gear may be understood as that when one gear rotates, the other gear that is in linkage with the one gear also rotates.

In the following descriptions related to "linkage" in the present invention, this understanding shall prevail if there is no special description.

The power motor 2 is configured to be in linkage with the motor power shaft 931. For example, the power motor 2 may output generated power to the motor power shaft 931, so as to output driving power the wheel 7 of the hybrid electric vehicle through the motor power shaft 931.

It should be noted that in the description of the present invention, the motor power shaft 931 may be a motor shaft of the power motor 2. Certainly, it may be understood that, the motor power shaft 931 and the motor shaft of the power motor 2 may alternatively be two separate shafts.

In some embodiments, as shown in Fig. 4, an output portion 221 may differentially rotate relative to one of the output shafts (for example, the second output shaft 922). In other words, the output portion 221 and the output shaft can independently rotate at different revolution speeds.

Further, the output portion 221 is configured to be selectively connected to one of the output shafts to rotate synchronously with the output shaft. In other words, the output portion 221 can rotate differentially or synchronously relative to the output shaft. In brief, the output portion 221 may be connected to one of the output shafts to rotate synchronously, and certainly, may alternatively be disconnected from the output shaft to rotate differentially.

As shown in Fig. 4, the output portion 221 may be freely sleeved over one of the output shafts, but is not limited thereto. For example, in the example of Fig. 4, the output portion 221 is freely sleeved over the second output shaft 922. That is, the output portion 221 and the second output shaft 922 can rotate differentially at different revolution speeds.

As stated above, the output portion 221 may rotate synchronously with one of the output shafts. For example, the output portion 221 may be synchronized with the output shaft by adding a corresponding synchronizer when necessary. The synchronizer may be an output portion synchronizer 221c. The output portion synchronizer 221c is configured to synchronize the output portion 221 with one of the output shafts.

In some embodiments, the power motor 2 is configured to output driving power to the wheel 7 of the hybrid electric vehicle, and the engine 1 and the power motor 2 drive a same wheel of the hybrid electric vehicle together. With reference to the example of Fig. 4, a differential 75 of a vehicle may be disposed between a pair of front wheels 71 or between a pair of rear wheels 72. In some examples of the present invention, when the power motor 2 drives a pair of front wheels 71, the differential 75 may be located between the pair of front wheels 71.

An effect of the differential 75 is to enable left and right driving wheels to roll at different angular velocities when the vehicle is turning or driving on an uneven road surface to ensure pure rolling motion between the driving wheels on two sides and the ground. The differential 75 is provided with a main reducer driven gear 74 of the main reducer 9. For example, the main reducer driven gear 74 may be disposed on a housing of the differential 75. The main reducer driven gear 74 may be a bevel gear, but is not limited thereto.

In some embodiments, as shown in Fig. 1, the power battery 3 is configured to supply power to the power motor 2. The secondary motor 5 is connected to the engine 1, and the secondary motor 5 is further connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4.

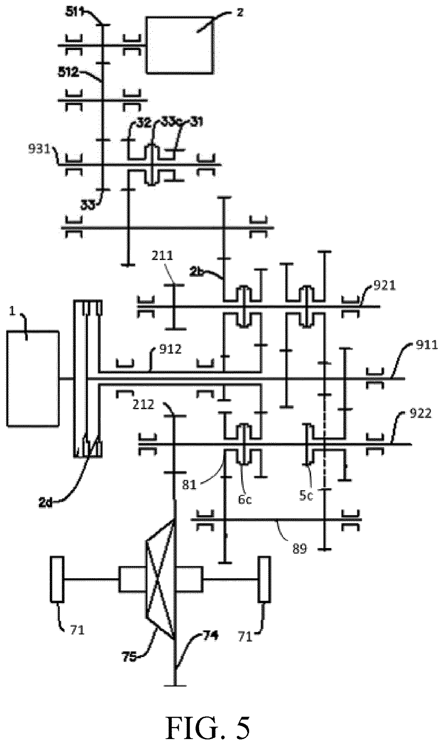

Another specific embodiment of a power system of a hybrid electric vehicle is further described below in detail with reference to Fig. 5. The embodiment is also applicable to a power system in which the engine 1 and the power motor 2 drives a same wheel together, that is, a two-wheel-drive hybrid electric vehicle. It should be noted that this embodiment mainly describes a specific transmission structure among the engine 1, the power motor 2, and the wheel 7, particularly, the structure of the transmission 90 in Fig. 2a. The remaining parts are basically the same as those in the embodiments of Fig. 1 and Fig. 3. Details are not described herein again.

It should be further noted that a plurality of input shafts, a plurality of output shafts, a motor power shaft 931, and relevant gears and gear shift elements on the shafts in the following embodiments may be used to constitute the transmission 90 in Fig. 2a.

In some embodiments, as shown in Fig. 1, Fig. 3, and Fig. 5, the power system of a hybrid electric vehicle mainly includes an engine 1, a power motor 2, a power battery 3, a DC-DC converter 4, a secondary motor 5, a plurality of input shafts (for example, a first input shaft 911 and a second input shaft 912), a plurality of output shafts (for example, a first output shaft 921 and a second output shaft 922), a motor power shaft 931, and relevant gears and gear shift elements (for example, a synchronizer) on the shafts.

As shown in Fig. 5, the engine 1 is configured to output power to a wheel 7 of the hybrid electric vehicle through a clutch 6, for example, a dual-clutch 2d show in Fig. 4. When power is transferred between the engine 1 and the input shaft, the engine 1 is configured to be selectively connected to at least one of a plurality of input shafts through the dual-clutch 2d. In other words, when transmitting power to the input shaft, the engine 1 can be selectively connected to one of the plurality of input shafts, or the engine 1 may be selectively connected two or more of the plurality of input shafts to transmit power.

For example, in the example of Fig. 5, the plurality of input shafts may include two input shafts, namely, a first input shaft 911 and a second input shaft 912. The second input shaft 912 may be coaxially sleeved over the first input shaft 911. The engine 1 can be selectively connected to one of the first input shaft 911 and the second input shaft 912 through the dual-clutch 2d, to transmit power. Alternatively, particularly, the engine 1 may be connected to both of the first input shaft 911 and the second input shaft 912 to transmit power. Certainly, it should be understood that the engine 1 may alternatively be disconnected from both of the first input shaft 911 and the second input shaft 912.

The plurality of output shafts may include two output shafts, namely, a first output shaft 921 and a second output shaft 922, and the first output shaft 921 and the second output shaft 922 are disposed in parallel to the first input shaft 911.

Transmission between the input shaft and the output shaft may be performed through a gear-position gear pair. For example, each input shaft is provided with a gear-position driving gear, that is, each of the first input shaft 911 and the second input shaft 912 is provided with a gear-position driving gear. Each output shaft is provided with a gear-position driven gear, that is, each of the first output shaft 921 and the second output shaft 922 is provided with a gear-position driven gear. The gear-position driven gear and the gear-position driving gear are correspondingly engaged with each other, thereby forming a plurality of different gear pairs with different speed ratio.

In some embodiments of the present invention, Six-gear-position transmission may be used between the input shaft and the output shaft, that is, a first-gear-position gear pair, a second-gear-position gear pair, a third-gear-position gear pair, a fourth-gear-position gear pair, a fifth-gear-position gear pair, and a sixth-gear-position gear pair are provided. However, the present invention is not limited to thereto. For a person of ordinary skill in the art, a quantity of gear-position gear pairs may be increased or decreased adaptively according to a transmission demand. This is not limited to the six-gear-position transmission shown in this embodiment of the present invention.

as shown in Fig. 5, one of the output shafts (for example, the first output shaft 921 and the second output shaft 922) is freely sheathed with at least one reverse-gear-position output gear 81, and the output shaft is further provided with a reverse-gear-position synchronizer for connecting the reverse-gear-position output gear 81 (for example, a fifth-gear-position synchronizer 5c and a sixth-gear-position synchronizer 6c). In other words, the reverse-gear-position synchronizer synchronizes the corresponding reverse-gear-position output gear 81 with the output shaft, so that the output shaft and the reverse-gear-position output gear 81 synchronized by the reverse-gear-position synchronizer can rotate synchronously, so that reverse-gear-position power can be output from the output shaft.

In some embodiments, as shown in Fig. 5, there is one reverse-gear-position output gear 81, and the one reverse-gear-position output gear 81 may be freely sleeved over the second output shaft 922. However, this is not limited in the present invention. In some other embodiments, there may also be two reverse-gear-position output gears 81, and the two reverse-gear-position output gears 81 may both be freely sleeved over the second output shaft 922. Certainly, it may be understood that there may alternatively be three or more reverse-gear-position output gears 81.

A reverse-gear-position shaft 89 is configured to be in linkage with one of the input shafts (for example, the first input shaft 911 and the second input shaft 912) and further in linkage with at least one reverse-gear-position output gear 81. For example, power transferred through one of the input shafts may be transferred to the reverse-gear-position output gear 81 through the reverse-gear-position shaft 89, so that reverse-gear-position power can be output from the reverse-gear-position output gear 81. In all the examples of the present invention, the reverse-gear-position output gear 81 is freely sleeved over the second output shaft 922, and the reverse-gear-position shaft 89 is in linkage with the first input shaft 911. For example, reverse-gear-position power output by the engine 1 may be output to the reverse-gear-position output gear 81 through the first input shaft 911 and the reverse-gear-position shaft 89.

The motor power shaft 931 is described in detail below. The motor power shaft 931 is freely sheathed with a motor-power-shaft first gear 31 and a motor-power-shaft second gear 32. The motor-power-shaft first gear 31 may be engaged with the main reducer driven gear 74 for transmission, to transmit driving power to the wheel 7 of the hybrid electric vehicle.

The motor-power-shaft second gear 32 is configured to be in linkage with one of the gear-position driven gears. When a hybrid electric vehicle having the power system according to this embodiment of the present invention is in some working conditions, power output by a power source may be transferred between the motor-power-shaft second gear 32 and the gear-position driven gear that is in linkage with the motor-power-shaft second gear 32. In this case, the motor-power-shaft second gear 32 is in linkage with the gear-position driven gear. For example, if the motor-power-shaft second gear 32 is in linkage with a second-gear-position driven gear 2b, the motor-power-shaft second gear 32 and the second-gear-position driven gear 2b may be directly engaged with each other or may perform indirect transmission through an intermediate transmission component.

Further, the motor power shaft 931 is further provided with a motor power shaft synchronizer 33c. The motor power shaft synchronizer 33c is located between the motor-power-shaft first gear 31 and the motor-power-shaft second gear 32, and the motor power shaft synchronizer 33c may selectively engage the motor-power-shaft first gear 31 or the motor-power-shaft second gear 32 with the motor power shaft 3. For example, in the example of Fig. 5, a connection sleeve of the motor power shaft synchronizer 33c may connect to the motor-power-shaft second gear 32 when moving leftward, and may connect to the motor-power-shaft first gear 31 when moving rightward.

The power motor 2 is configured to be in linkage with the motor power shaft 931. For example, the power motor 2 may output generated power to the motor power shaft 931, so as to output driving power the wheel 7 of the hybrid electric vehicle through the motor power shaft 931.

For the motor-power-shaft first gear 31, because it is engaged with the main reducer driven gear 74, the power motor 2 may be connected to the motor-power-shaft first gear 31 through the motor power shaft synchronizer 33c to directly output generated power from the motor-power-shaft first gear 31. In this way, a transmission chain is shortened, intermediate transmission components are reduced, and transmission efficiency is improved.

Second, transmission manners of the motor power shaft 931 and the power motor 2 are described in detail with reference to specific embodiments.

In some embodiments, as shown in Fig. 5, a motor-power-shaft third gear 33 is further fixedly disposed on the motor power shaft 931, and the power motor 2 is configured to perform direct engagement and transmission or indirect transmission with the motor-power-shaft third gear 33.

Further, a first motor gear 511 is disposed on the motor shaft of the power motor 2, and the first motor gear 511 performs transmission with the motor-power-shaft third gear 33 through an intermediate gear 512. For another example, the power motor 2 may alternatively be connected to the motor power shaft 931 coaxially.

In some embodiments, the power motor 2 is configured to output driving power to the wheel 7 of the hybrid electric vehicle, and the engine 1 and the power motor 2 drive a same wheel of the hybrid electric vehicle together. With reference to the example of Fig. 5, a differential 75 of a vehicle may be disposed between a pair of front wheels 71 or between a pair of rear wheels 72. In some examples of the present invention, when the power motor 2 drives a pair of front wheels 71, the differential 75 may be located between the pair of front wheels 71.

An effect of the differential 75 is to enable left and right driving wheels to roll at different angular velocities when the vehicle is turning or driving on an uneven road surface to ensure pure rolling motion between the driving wheels on two sides and the ground. The differential 75 is provided with a main reducer driven gear 74 of the main reducer 9. For example, the main reducer driven gear 74 may be disposed on a housing of the differential 75. The main reducer driven gear 74 may be a bevel gear, but is not limited thereto.

Further, a first-output-shaft output gear 211 is fixedly disposed on the first output shaft 921, the first-output-shaft output gear 211 moves synchronously with the first output shaft 921, and the first-output-shaft output gear 211 is engaged with the main reducer driven gear 74 for transmission, so that power transferred through the first output shaft 921 can be transferred from the first-output-shaft output gear 211 to the main reducer driven gear 74 and the differential 75.

A second-output-shaft output gear 212 is fixedly disposed on the second output shaft 922, the second-output-shaft output gear 212 moves synchronously with the second output shaft 922, and the second-output-shaft output gear 212 is engaged with the main reducer driven gear 74 for transmission, so that power transferred through the second output shaft 922 can be transferred from the second-output-shaft output gear 212 to the main reducer driven gear 74 and the differential 75.

The motor-power-shaft first gear 31 may be configured to output power transferred through the motor power shaft 931. Therefore, the motor-power-shaft first gear 31 is also engaged with the main reducer driven gear 74 for transmission.

In some embodiments, as shown in Fig. 1, the power battery 3 is configured to supply power to the power motor 2. The secondary motor 5 is connected to the engine 1, and the secondary motor 5 is further connected to the power motor 2, the DC-DC converter 4, and the power battery 3 separately, and when being actuated by the engine 1 to generate power, the secondary motor 5 implements at least one of charging the power battery 3, supplying power to the power motor 2, and supplying power to the DC-DC converter 4.

Therefore, in the power system of a hybrid power vehicle according to this embodiment of the present invention, the engine can be prevented from participating in driving at a low speed, and further, the clutch is not used, thereby reducing wear or slipping wear of the clutch while reducing jerks and improving comfortability. In addition, the engine can operate in an economic zone at a low speed, only generate power, and do not perform driving, thereby reducing fuel consumption, reducing engine noise, maintaining low-speed electric balance and low-speed smoothness of the whole vehicle, and improving performance of the whole vehicle. In addition, the secondary motor can directly charge the power battery, may also supply power to a low-voltage device such as the low-voltage storage battery and the first electric device, and may also be used as a starter.

Further, as shown in Fig. 1 and Fig. 3, the power system of the hybrid electric vehicle further includes a control module 101. The control module 101 is configured to control the power system of the hybrid electric vehicle. It should be understood that the control module 101 may be an assembly of controllers having a control function in the hybrid electric vehicle, for example, may be an assembly of a vehicle control unit of the hybrid electric vehicle and the first controller 51 and the second controller 21 in the embodiment of Fig. 3. However, this is not limited thereto. A control method performed by the control module is described below in detail.

In some embodiments of the present invention, the control module 101 is configured to obtain a State of Charge (SOC, also referred to as the remaining electricity quantity) value of the power battery 3 and a vehicle speed V of the hybrid electric vehicle, and control, according to the SOC value of the power battery 3 and the vehicle speed V of the hybrid electric vehicle, the secondary motor 5 to enter a generating power adjustment mode, to enable the engine 1 to operate in a preset optimal economic zone. The generating power adjustment mode is a mode of adjusting a generating power of the engine. In the generating power adjustment mode, according to the invention, the engine 1 is controlled to actuate the secondary motor 5 to generate power to adjust the generating power of the secondary motor 5.

It should be noted that the SOC value of the power battery 3 may be collected through a battery management system of the hybrid electric vehicle, so that the battery management system sends the collected SOC value of the power battery 3 to the control module 101, to enable the control module 101 to obtain the SOC value of the power battery 3.

It should be further noted that the preset optimal economic zone of the engine 1 may be determined with reference to the engine universal characteristic curve diagram. As shown in Fig. 1a, which is an example of an engine universal characteristic curve diagram, where a lateral ordinate is output torsion moment of the engine 1, a horizontal ordinate is a revolution speed of the engine 1, and a curve a is a fuel economy curve of the engine 1. A zone corresponding to the fuel economy curve is the optimal economic zone of the engine, that is, when the rotation moment and the torsion moment of the engine 1 are located on an optimal fuel economy curve of the engine, the engine is located in the optimal economic zone. Therefore, in this embodiment of the present invention, the control module 101 may enable the engine 1 to operate in the preset optimal economic zone by controlling the revolution speed and the output torsion moment of the engine 1 to be located on the fuel economy curve of the engine, for example, the curve a.

Specifically, in a traveling process of the hybrid electric vehicle, the engine 1 may output power to the wheel 7 of the hybrid electric vehicle through the clutch 6, and the engine 1 may further actuate the secondary motor 5 to generate power. Therefore, the output power of the engine mainly includes two parts: one part is output to the secondary motor 5, that is, the generating power that actuates the secondary motor 5 to generate power, and the other part is output to the wheel 7, that is, the driving power that drive the wheel 7.

When the engine 1 actuates the secondary motor 5 to generate power, the control module 101 may first obtain an SOC value of the power battery 3 and a vehicle speed of the hybrid electric vehicle, then, control the secondary motor 5 according to the SOC value of the power battery and the vehicle speed of the hybrid electric vehicle, to enter a generating power adjustment mode, to enable the engine 1 to operate at a preset optimal economic zone. In the generating power adjustment mode, the master controller 101 of the control module may adjust the generating power of the secondary motor 5 on the premise of enabling the engine 1 to operate in the preset optimal economic zone.

In an embodiment of the present invention, the control module 101 is further configured to control, according to the SOC value of the power battery 3 and the vehicle speed of the hybrid electric vehicle, the generating power of the secondary motor 5, and obtain the generating power of the engine 1 according to the generating power of the secondary motor 5, to control the engine 1 to operate at the preset optimal economic zone.

Therefore, the engine 1 can be enabled to operate in the preset optimal economic zone. Because fuel consumption of the engine 1 is lowest in the preset optimal economic zone, and fuel economy is highest, fuel consumption of the engine 1 can be reduced, noise of the engine 1 can be reduced, and economy of operation of the whole vehicle is improved. In addition, because the secondary motor 5 has a relatively high generating power and relatively high generating efficiency at a low speed, a power demand of low-speed traveling can be satisfied, low-speed electric balance and low-speed smoothness of the whole vehicle can be maintained, and power performance of the whole vehicle can be improved. Power demands of the power motor and a high-voltage electrical device may be satisfied by charging the power battery, so as to ensure that the power motor drives the whole vehicle to normally travel.

Further, in an embodiment of the present invention, the control module 101 is configured to: when the SOC value of the power battery 3 is greater than a preset limit value M2 and is less than or equal to a first preset value M1, if the vehicle speed V of the hybrid electric vehicle is less than a first preset vehicle speed V1, control the secondary motor 5 to enter the generating power adjustment mode.

The first preset value may be a preset upper limit value of the SOC value of the power battery 3, for example, a determining value for stopping charging, preferably, 30%. The preset value may be a preset lower limit value of the SOC value of the power battery 3, for example, a determining value for stopping charging, preferably, 10%. The SOC value of the power battery 3 may be classified into three ranges according to the first preset value and the preset limit value, namely, a first electricity quantity range, a second electricity quantity range, and a third electricity quantity range. When the SOC value of the power battery 3 is less than or equal to the preset limit value, the SOC value of the power battery 3 falls within the first electricity quantity range, and in this case, the power battery 3 is only charged without being discharged. When the SOC value of the power battery 3 is greater than the preset limit value and is less than or equal to the first preset value, the SOC value of the power battery 3 falls within the second electricity quantity range, and in this case, the power battery 3 has a charging demand, that is, the power battery 3 may be actively charged. When the SOC value of the power battery is greater than the first preset value, the SOC value of the power battery falls within the third electricity quantity range, and in this case, the power battery 3 may not be charged, that is, the power battery 3 is not actively charged.

Specifically, after obtaining the SOC value of the power battery and the vehicle speed of the hybrid electric vehicle, the control module 101 may determine a range of the SOC value of the power battery. If the SOC value of the power battery falls within the second electricity quantity range, and the SOC value of the power battery is greater than the preset limit value and is less than or equal to the first preset value, indicating that the power battery 3 may be charged, the control module 101 further determines whether the vehicle speed of the hybrid electric vehicle is less than the first preset vehicle speed, and if the vehicle speed of the hybrid electric vehicle is less than the first preset vehicle speed, controls the secondary motor 5 to enter the generating power adjustment mode. In this case, the vehicle speed of the hybrid electric vehicle is relatively low, and the required driving power is relatively low, so that the power motor 2 is sufficient to drive the hybrid electric vehicle to travel, and the engine 1 may only actuate the secondary motor 5 to generate power and does not participate in driving.

Therefore, the engine only generates power and does not participate in driving at a low speed. Because the engine does not participate in driving, the clutch does not need to be used, thereby reducing wear or slipping wear of the clutch while reducing jerks and improving comfortability.

Further, in an embodiment of the present invention, the control module 101 is further configured to: when the SOC value of the power battery 3 is greater than a preset limit value M2 and is less than or equal to a first preset value M1, and the vehicle speed V of the hybrid electric vehicle is less than a first preset vehicle speed V1, obtain a vehicle required power P2 of the hybrid electric vehicle, and when the vehicle required power P2 is less than or equal to a maximum allowable generating power Pmax of the secondary motor 5, control the secondary motor 5 to enter the generating power adjustment mode.

Specifically, in a traveling process of the hybrid electric vehicle, if the SOC value of the power battery 3 is greater than a preset limit value M2 and is less than or equal to a first preset value M1, and the vehicle speed V of the hybrid electric vehicle is less than a first preset vehicle speed V1, that is, the vehicle speed of the hybrid electric vehicle is relatively low, the control module 101 obtains a vehicle required power P2 of the hybrid electric vehicle, and when the vehicle required power P2 is less than or equal to a maximum allowable generating power Pmax of the secondary motor 5, controls the secondary motor 5 to enter the generating power adjustment mode.

Therefore, the engine only generates power and does not participate in driving at a low speed. Because the engine does not participate in driving, the clutch does not need to be used, thereby reducing wear or slipping wear of the clutch while reducing jerks and improving comfortability.

Further, in an embodiment of the present invention, the control module 101 is further configured to: when the SOC value of the power battery 3 is greater than the preset limit value and is less than or equal to the first preset value M1, the vehicle speed V of the hybrid electric vehicle is less than the first preset vehicle speed V1, and the vehicle required power P2 is less than or equal to the maximum allowable generating power Pmax of the secondary motor 5, obtain an accelerator pedal depth D of the hybrid electric vehicle and a vehicle resistance F of the hybrid electric vehicle, and when the accelerator pedal depth D is less than or equal to a first preset depth D1 and the vehicle resistance F of the hybrid electric vehicle is less than or equal to a first preset resistance F1, control the secondary motor 5 to enter the generating power adjustment mode.

It should be noted that the vehicle resistance of the hybrid electric vehicle a traveling resistance of the hybrid electric vehicle such as a rolling resistance, an acceleration resistance, a slope resistance, and an air resistance.

Specifically, if the SOC value of the power battery 3 is greater than the preset limit value and is less than or equal to the first preset value M1, the vehicle speed V of the hybrid electric vehicle is less than the first preset vehicle speed V1, and the vehicle required power P2 is less than or equal to the maximum allowable generating power Pmax of the secondary motor 5, the control module 101 obtains an accelerator pedal depth D of the hybrid electric vehicle and a vehicle resistance F of the hybrid electric vehicle in real time, and when the accelerator pedal depth D is less than or equal to a first preset depth D1 and the vehicle resistance F of the hybrid electric vehicle is less than or equal to a first preset resistance F1, the control module 101 controls the secondary motor 5 to enter the generating power adjustment mode.

Therefore, the engine only generates power and does not participate in driving at a low speed. Because the engine does not participate in driving, the clutch does not need to be used, thereby reducing wear or slipping wear of the clutch while reducing jerks and improving comfortability.

As stated above, when the hybrid electric vehicle travels at a low speed, the engine 1 only generates power and does not participate in driving. Because the engine does not participate in driving, the clutch does not need to be used, thereby reducing wear or slipping wear of the clutch while reducing jerks and improving comfortability. In addition, the engine operates in an economic zone at a low speed. Because fuel consumption of the engine is lowest in the preset optimal economic zone, and fuel economy is highest, fuel consumption can be reduced, noise of the engine can be reduced, and economy of operation of the whole vehicle is improved. Therefore, low-speed electric balance and low-speed smoothness of the whole vehicle can be maintained, and performance of the whole vehicle can be improved.

According to an embodiment of the present invention, the control module 101 is further configured to: when controlling the engine 1 to individually actuate the secondary motor 5 to generate power and controlling the power motor 2 to individually output driving power, obtain generating efficiency of the engine 1 according to the following formula: $P 0 = P 1 / η / ζ$ P0 is the generating power of the engine 1, P1 is a generating power of the secondary motor 5, η is belt transmission efficiency, and ζ is efficiency of the secondary motor 5.

That is, in a case that the engine 1 may only generate power and does not participate in driving, the control module 101 may calculate the generating power P0 of the engine 1 according to the generating power of the secondary motor 5, the belt transmission efficiency η, and the efficiency ζ of the secondary motor 5, and control the engine 1 to actuate, at the obtained generating power P0, the secondary motor 5 to generate power, to control the generating power of the secondary motor 5.

Correspondingly, when the SOC value of the power battery 3, the vehicle speed V, the accelerator pedal depth D, and the vehicle resistance F of the hybrid electric vehicle do not satisfy the foregoing conditions, the engine 1 may participate in driving, and a specific operating process thereof is as follows.

According to an embodiment of the present invention, the control module 101 is further configured to: when the SOC value of the power battery 3 is less than the preset limit value, or the vehicle speed of the hybrid electric vehicle is greater than or equal to the first preset vehicle value, or the vehicle required power is greater than the maximum allowable generating power of the secondary motor 5, or the accelerator pedal depth is greater than the first preset depth, or the vehicle resistance of the hybrid electric vehicle is greater than the first preset resistance, control the engine 1 to participate in driving.

That is, when the SOC value of the power battery 3 is less than the preset limit value M2, or the vehicle speed of the hybrid electric vehicle is greater than or equal to the first preset vehicle value, or the vehicle required power is greater than the maximum allowable generating power of the secondary motor 5, or the accelerator pedal depth is greater than the first preset depth, or the vehicle resistance of the hybrid electric vehicle is greater than the first preset resistance, the control module 101 controls the engine 1 to participate in driving. In this case, the power battery 3 is no longer discharged, the driving power needed by the whole vehicle is relatively large, the vehicle required power is relatively large, the accelerator pedal depth is relatively large, or the vehicle resistance is relatively large, the power motor 2 is insufficient to drive the hybrid electric vehicle to travel, and the engine 1 participates in driving to supplement driving power.

Therefore, the engine 1 can participate in driving when the driving power output by the power motor 2 is insufficient, to ensure normal traveling of the whole vehicle, improve power performance of the whole vehicle, and increase a traveling distance of the whole vehicle.

More specifically, the control module 101 is further configured to: when the vehicle required power is greater than the maximum allowable generating power of the secondary motor 5, further control the engine 1 to participate in driving to enable the engine 1 to output power to the wheel through the clutch 6.

In addition, the control module 101 is further configured to: when the SOC value of the power battery 3 is less than the preset limit value M2, control the engine 1 to participate in driving to enable the engine 1 to output driving power to the wheel 7 through the clutch 6. When the SOC value of the power battery 3 is less than or equal to the first preset value M1, the vehicle speed V of the hybrid electric vehicle is less than the first preset vehicle speed V1, and the accelerator pedal depth D is greater than the first preset depth D1, the control module 101 controls the engine 1 to participate in driving to enable the engine 1 to output power to the wheel 7 through the clutch 6. When the SOC value of the power battery 3 is less than or equal to the first preset value M1, the vehicle speed V of the hybrid electric vehicle is less than the first preset vehicle speed V1, and the resistance F is greater than the first preset resistance F1, the control module 101 controls the engine 1 to participate in driving to enable the engine 1 to output power to the wheel 7 through the clutch 6.

Specifically, when the engine 1 actuates the secondary motor 5 to generate power, and the power motor 2 outputs driving power to the wheel 7 of the hybrid electric vehicle, the control module 101 obtains the SOC value of the power battery 3, and the accelerator pedal depth D, the vehicle speed V, and the vehicle resistance F of the hybrid electric vehicle in real time, and performs determining on the SOC value of the power battery 3, and the accelerator pedal depth D, the vehicle speed V, and the vehicle resistance F of the hybrid electric vehicle.

First, when the SOC value of the power battery 3 is less than the preset limit value M2, the control module 101 controls the engine 1 to output power to the wheel 7 through the clutch 6, to enable the engine 1 and the power motor 2 to both participate in driving, and reduce a load of the power motor 2 to reduce power consumption of the power battery 3, thereby ensuring that the engine 1 operates in the preset optimal economic zone while preventing the SOC value of the power battery 3 from decreasing quickly.

Second, when the SOC value of the power battery 3 is less than or equal to the first preset value M1, the vehicle speed V of the hybrid electric vehicle is less than the first preset vehicle speed V1, and the accelerator pedal depth D is greater than the first preset depth D1, the control module 101 controls the engine 1 to output power to the wheel 7 through the clutch 6, to enable the engine 1 and the power motor 2 to both participate in driving, and reduce a load of the power motor 2 to reduce power consumption of the power battery 3, thereby ensuring that the engine 1 operates in the preset optimal economic zone while preventing the SOC value of the power battery 3 from decreasing quickly.

Third, when the SOC value of the power battery 3 is less than or equal to the first preset value M1, the vehicle speed V of the hybrid electric vehicle is less than the first preset vehicle speed V1, and the resistance F of the hybrid electric vehicle is greater than the first preset resistance F1, the control module 101 controls the engine 1 to output power to the wheel 7 through the clutch 6, to enable the engine 1 and the power motor 2 to both participate in driving, and reduce a load of the power motor 2 to reduce power consumption of the power battery 3, thereby ensuring that the engine 1 operates in the preset optimal economic zone while preventing the SOC value of the power battery 3 from decreasing quickly.

Therefore, the engine 1 can participate in driving when the driving power output by the power motor 2 is insufficient, to ensure normal traveling of the whole vehicle, improve power performance of the whole vehicle, and increase a traveling distance of the whole vehicle. Therefore, the engine can be controlled to operate in an economic zone. Because fuel consumption of the engine 1 in the preset optimal economic zone is lowest in the preset optimal economic zone, and fuel economy is highest, fuel consumption can be reduced, noise can be reduced, and economy of operation of the whole vehicle is improved.

Furthermore, the control module 101 is further configured to: when the SOC value of the power battery 3 is less than the preset limit value, and the vehicle speed of the hybrid electric vehicle is greater than the first preset vehicle speed, control the engine 1 to participate in driving to enable the engine 1 to output power to the wheel 7 through the clutch 6.

Therefore, the engine 1 can participate in driving when the driving power output by the power motor 2 is insufficient, to ensure normal traveling of the whole vehicle, improve power performance of the whole vehicle, and increase a traveling distance of the whole vehicle.

Certainly, it should be understood that the control module 101 is further configured to: when the SOC value of the power battery is greater than the first preset value, the engine 1 does not actuate the secondary motor 5 to generate power. In this case, the electricity quantity of the power battery 3 is close to a full state, and does not need to be charged, and the engine 1 does not actuate the secondary motor 5 to generate power. That is, when the electricity quantity of the power battery 3 is close to a full state, the engine 1 does not actuate the secondary motor 5 to generate power, so that the secondary motor 5 does not charge the power battery 3.

Further, after the secondary motor 5 enters the generating power adjustment mode, the control module 101 may adjust the generating power of the secondary motor 5. A generating power adjustment process of the control module 101 in this embodiment of the present invention is specifically described below.

According to the present invention, the control module 101 is further configured to: after the secondary motor 5 enters the generating power adjustment mode, adjust a generating power P1 of the secondary motor 5 according to the vehicle required power P2 of the hybrid electric vehicle and a charging power P3 of the power battery 3.

According to the present invention, a formula for adjusting the generating power P1 of the secondary motor 5 according to the vehicle required power P2 of the hybrid electric vehicle and the charging power P3 of the power battery 5 is as follows: $P 1 = P 2 + P 3 , where P 2 = P 11 + P 21$ P1 is the generating power of the secondary motor 5, P2 is the vehicle required power, P3 is the charging power of the power battery, P11 is a vehicle driving power, and P21 is an electric device power.

It should be noted that the electric device includes a first electric device 10 and a second electric device 30, that is, the electric device power P21 may include required powers of a high-voltage electric device and a low-voltage electric device.

It should be further noted that the vehicle driving power P11 may include an output power of the power motor 2. The control module 101 may obtain the vehicle driving power P11 according to a preset accelerator-rotation moment curve of the power motor 2 and a revolution speed of the power motor 2, where the preset accelerator-rotation moment curve may be determined during power matching of the hybrid electric vehicle. In addition, the control module 101 may obtain an electric device power P21 in real time according to electric devices operating in the whole vehicle, for example, calculate the electric device power P21 according to the DC consumption on the bus. In addition, the control module 101 may obtain the charging power P3 of the power battery 3 according to the SOC value of the power battery 3. Assuming that the vehicle driving power that is obtained in real time is P11 = b1 kw, the electric device power is P21 = b2 kw, and the charging power of the power battery 3 is P3 = b3 kw, the generating power of the secondary motor 5 = b1 + b2 + b3.

Specifically, in a traveling process of the hybrid electric vehicle, the control module 101 may obtain the charging power P3 of the power battery 3, the vehicle driving power P11, and the electric device power P21, and use a sum of the charging power P3 of the power battery 3, the vehicle driving power P11, and the electric device power P21 as the generating power P1 of the secondary motor 5. Therefore, the control module 101 may adjust the generating power of the secondary motor 5 according to the calculated value of P1. For example, the control module 101 may control the output torsion moment and the revolution speed of the engine 1 according to the calculated value of P1, to adjust the power at which the engine 1 actuates the secondary motor 5 to generate power.

Further, according to an embodiment of the present invention, the control module 101 is further configured to: obtain an SOC value change rate of the power battery 3, and adjust the generating power P1 of the secondary motor 5 according to a relationship between the vehicle required power P2 and a minimum output power Pmin corresponding to an optimal economic zone of the engine 1 and the SOC value change rate of the power battery.

It should be understood that the control module 101 may obtain the SOC value change rate of the power battery 3 according to the SOC value of the power battery 3, for example, collect an SOC value of the power battery once every time interval t. In this way, a ratio of a difference between a current SOC value of the power battery 3 and a previous SOC value to the time interval t is used as the SOC value change rate of the power battery.

Specifically, the optimal economic zone of the engine may be determined according to the engine universal characteristic curve shown in Fig. 1a, to further obtain a minimum output power Pmin corresponding to the optimal economic zone of the engine. After determining the minimum output power Pmin corresponding to the optimal economic zone of the engine, the control module 101 may adjust the generating power of the secondary motor 5 according to a relationship between the vehicle required power P2 and the minimum output power Pmin corresponding to the optimal economic zone of the engine 1 and the SOC value change rate of the power battery 3.

Therefore, when the hybrid electric vehicle travels at a low speed, the engine is enabled to operate in an economic zone, so that fuel consumption can be reduced, noise of the engine can be reduced, and economy of operation of the whole vehicle is improved. In addition, the engine 1 only generates power and does not participate in driving at a low speed. Because the engine does not participate in driving, the clutch does not need to be used, thereby reducing wear or slipping wear of the clutch while reducing jerks and improving comfortability. Therefore, low-speed electric balance and low-speed smoothness of the whole vehicle can be maintained, and performance of the whole vehicle can be improved.

A specific adjustment manner in which after the secondary motor 5 enters the generating power adjustment mode, the control module 101 adjusts the generating power of the secondary motor 5 according to a relationship between the vehicle required power P2 and the minimum output power Pmin corresponding to the optimal economic zone of the engine 1 and the SOC value change rate of the power battery 3 is further described below.

Specifically, when the engine 1 actuates the secondary motor 5 to generate power and the power motor 2 outputs driving power to the wheel 7 of the hybrid electric vehicle, the vehicle driving power P11 and the electric device power P21 are obtained in real time, to obtain the vehicle required power P2 of the hybrid electric vehicle. The control module 101 determines the vehicle required power P2 of the hybrid electric vehicle, where the vehicle required power P2 may satisfy the following three cases.

First case: the vehicle required power P2 is less than the minimum output power Pmin corresponding to the optimal economic zone of the engine 1. Second case: the vehicle required power P2 is greater than or equal to the minimum output power Pmin corresponding to the optimal economic zone of the engine and is less than or equal to the maximum allowable generating power Pmax of the secondary motor 5. Third case: the vehicle required power P2 is greater than the maximum allowable generating power Pmax of the secondary motor 5.

In an embodiment of the first case, when the vehicle required power P2 is less than the minimum output power Pmin corresponding to the optimal economic zone of the engine 1, the control module 101 obtains the charging power P3 of the power battery 3 according to the SOC value change rate of the power battery, and determines whether the charging power P3 of the power battery 3 is less than a difference between the minimum output power Pmin and the vehicle required power P2. If the charging power P3 of the power battery 3 is less than the difference between the minimum output power Pmin and the vehicle required power P2, the generating power P1 of the secondary motor 5 is adjusted by controlling the engine 1 to generate power at the minimum output power Pmin. If the charging power P3 of the power battery 3 is greater than or equal to the difference between the minimum output power Pmin and the vehicle required power P2, an output power of the engine 1 within the preset optimal economic zone is obtained according to a sum of the charging power P3 of the power battery 3 and the vehicle required power P2, and the generating power P1 of the secondary motor 5 is adjusted by controlling the engine to generate power at the obtained output power.

It should be noted that a first relationship table between the SOC value change rate of the power battery 3 and the charging power P3 of the power battery 3 may be pre-stored in the control module 101. Therefore, after obtaining the SOC value change rate of the power battery, the control module 101 may obtain the corresponding charging power P3 of the power battery 3 by performing comparison in the first relationship table. The SOC value change rate of the power battery 3 and the charging power P3 of the power battery 3 satisfy the relationships shown in Table 1.

**Table 1**

| | | | | | |
|---|---|---|---|---|---|
| SOC value change rate of the power battery 3 | A1 | A2 | A3 | A4 | A5 |
| Charging power P3 of the power battery 3 | B1 | B2 | B3 | B4 | B5 |

It can be learned from Table 1 that when the SOC value change rate obtained by the control module 101 is A1, the obtained corresponding charging power P3 of the power battery 3 is B1; when the SOC value change rate obtained by the control module 101 is A2, the obtained corresponding charging power P3 of the power battery 3 is B2; when the SOC value change rate obtained by the control module 101 is A3, the obtained corresponding charging power P3 of the power battery 3 is B3; when the SOC value change rate obtained by the control module 101 is A4, the obtained corresponding charging power P3 of the power battery 3 is B4; and when the SOC value change rate obtained by the control module 101 is A5, the obtained corresponding charging power P3 of the power battery 3 is B5.

Specifically, after the secondary motor 5 enters the generating power adjustment mode, the control module 101 obtains the vehicle driving power P11 and the electric device power P21 in real time, to obtain the vehicle required power P2 of the hybrid electric vehicle, and determines the vehicle required power P2 of the hybrid electric vehicle. When the vehicle required power P2 is less than the minimum output power Pmin corresponding to the optimal economic zone of the engine 1, a charging power P3 of the power battery 3 is obtained according to the SOC value change rate of the power battery 3, and whether the charging power P3 of the power battery 3 is less than a difference between the minimum output power Pmin and the vehicle required power P2 is determined.

When the vehicle required power P2 is less than the minimum output power Pmin corresponding to the optimal economic zone of the engine 1, if the charging power P3 of the power battery 3 is less than the difference between the minimum output power Pmin and the vehicle required power P2, that is, P3 < Pmin - P2, the generating power of the secondary motor 5 is adjusted by controlling the engine 1 to generate power at the minimum output power Pmin. If the charging power P3 of the power battery 3 is greater than or equal to the difference between the minimum output power Pmin and the vehicle required power P2, that is, P3 ≥ Pmin - P2, an output power of the engine 1 within the preset optimal economic zone is obtained according to a sum of the charging power P3 of the power battery 3 and the vehicle required power P2, and the generating power of the secondary motor 5 is adjusted by controlling the engine 1 to generate power at the obtained output power.

When the vehicle required power P2 is less than the minimum output power Pmin corresponding to the optimal economic zone of the engine 1, the generating power of the engine 1 is obtained according to a relationship between the charging power P3 of the power battery 3 and a difference between the minimum output power Pmin corresponding to the optimal economic zone of the engine 1 and the vehicle required power P2, to enable the engine 1 to operate at the preset optimal economic zone. In addition, the engine 1 only generates power and does not participate in driving. Therefore, fuel consumption of the engine can be reduced, and noise of the engine can be reduced.

In an embodiment of the second case, when the vehicle required power P2 is greater than or equal to the minimum output power Pmin corresponding to the optimal economic zone of the engine and is less than or equal to the maximum allowable generating power Pmax of the secondary motor 5, the control module 101 obtains the charging power P3 of the power battery 3 according to the SOC value change rate of the power battery 3, obtains an output power P4 of the engine 1 within the preset optimal economic zone according to a sum of the charging power P3 of the power battery 3 and the vehicle required power P2, and adjusts the generating power P1 of the secondary motor 5 by controlling the engine 1 to generate power at the obtained output power P4.

Specifically, when the vehicle required power P2 is greater than or equal to the minimum output power Pmin corresponding to the optimal economic zone of the engine 1 and is less than the maximum allowable generating power Pmax of the secondary motor 5, the control module 101 further obtains the charging power P3 of the power battery 3 according to the SOC value change rate of the power battery 3 when the engine 1 is controlled to operate in the preset optimal economic zone, and obtains, according to the sum of the charging power P3 of the power battery 3 and the vehicle required power P2, the output power P4 of the engine 1 within the preset optimal economic zone, where the obtained output power is P4 = P3 + P2. Further, the control module 101 controls the engine 1 to generate power at the obtained output power P4 to adjust the generating power P1 of the secondary motor 5, so as to increase the SOC value of the power battery 3 and enable the engine 1 to operate in the preset optimal economic zone.

Therefore, when the vehicle required power P2 is greater than or equal to the minimum output power Pmin corresponding to the optimal economic zone of the engine 1 and is less than the maximum allowable generating power Pmax of the secondary motor 5, the output power of the engine 1 is obtained according to a sum of the charging power P3 of the power battery 3 and the vehicle required power P2, to enable the engine 1 to operate at the preset optimal economic zone. In addition, the engine 1 only generates power and does not participate in driving. Therefore, fuel consumption of the engine can be reduced, and noise of the engine can be reduced.

In an embodiment of the third case, when the vehicle required power P2 is greater than the maximum allowable generating power Pmax of the secondary motor 5, the control module 101 further controls the engine 1 to participate in driving to enable the engine 1 to output power to the wheel 7 through the clutch 6.

Specifically, when the vehicle required power P2 is greater than the maximum allowable generating power Pmax of the secondary motor 5, that is, when the vehicle required power P2 of the hybrid electric vehicle is higher than the generating power P1 of the secondary motor 5, the control module 101 further controls the engine 1 to output driving power to the wheel 7 through the clutch 6 to enable the engine 1 to participate in driving, so that the engine 1 bears partial driving power P', to reduce a demand for the generating power P1 of the secondary motor 5, and enable the engine 1 to operate in the preset optimal economic zone.

Therefore, when the vehicle required power P2 is greater than the maximum allowable generating power Pmax of the secondary motor 5, the power battery 3 is externally discharged to supply power to the power motor 2. In this case, the control module 101 controls both the engine 1 and the power motor 2 to output power to the wheel 7 of the hybrid electric vehicle, to enable the engine 1 to operate in the preset optimal economic zone.

Therefore, the engine can operate in an economic zone at a low speed, only generates power, and does not participate in driving, so that the clutch is not used, thereby reducing wear or slipping wear of the clutch while reducing jerks and improving comfortability. In addition, fuel consumption is reduced, and engine noise is reduced. Further low-speed electric balance and low-speed smoothness of the whole vehicle are maintained, and performance of the whole vehicle is improved.

In conclusion, according to the hybrid electric vehicle of a hybrid electric vehicle provided in this embodiment of the present invention, the engine outputs power to the wheel of the hybrid electric vehicle through the clutch, the power motor outputs driving power to the wheel of the hybrid electric vehicle, the power battery supplies power to the power motor, the secondary motor is actuated by the engine to generate power, and the control module obtains an SOC value of the power battery and a vehicle speed of the hybrid electric vehicle, and controls, according to the SOC value of the power battery and the vehicle speed control of the hybrid electric vehicle, the secondary motor to enter a generating power adjustment mode, to enable the engine to operate in a preset optimal economic zone. Therefore, fuel consumption of the engine can be reduced, economy of operation of the whole vehicle is improved, and noise of the engine can be reduced. In addition, a plurality of driving modes can be implemented, low-speed electric balance and low-speed smoothness of the whole vehicle can be maintained, and performance of the whole vehicle can be improved.

The embodiments of the present invention further provide a hybrid electric vehicle.

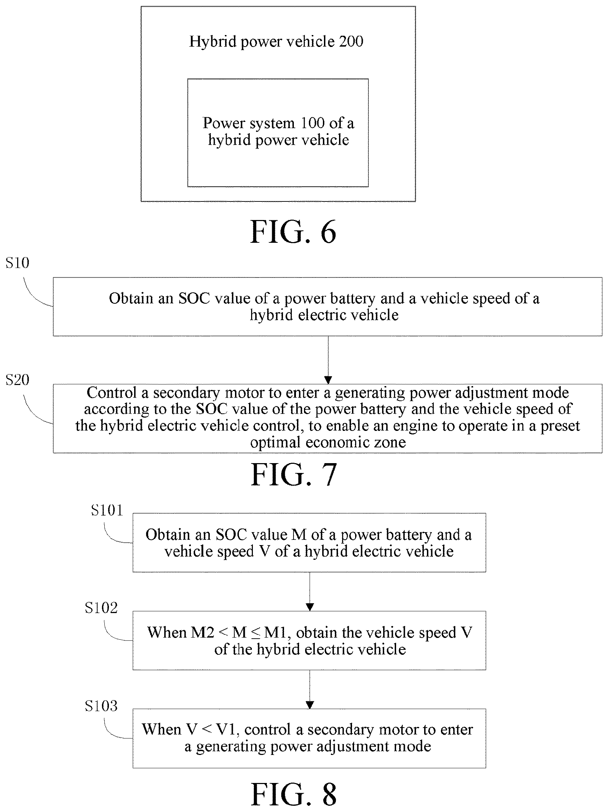

Fig. 6 is a schematic block diagram of a hybrid power vehicle according to an embodiment of the present invention. As shown in Fig. 6, the hybrid electric vehicle 200 includes the power system 100 of a hybrid electric vehicle of the foregoing embodiment.

In conclusion, according to the hybrid electric vehicle provided in this embodiment of the present invention, by means of the foregoing power system of the hybrid electric vehicle, fuel consumption of the engine can be reduced, and economy of operation of the whole vehicle is improved. In addition, stability of the whole vehicle system can be improved, energy consumption of the engine is reduced, and economy of operation of the whole vehicle is improved.

Fig. 7 is a flowchart of a power generation control method of a hybrid power vehicle according to an embodiment of the present invention. The power system of a hybrid electric vehicle includes an engine, a power motor, a power battery, a DC-DC converter, and a secondary motor connected to the engine. The engine outputs power to a wheel of the hybrid electric vehicle through the clutch, the power motor outputs driving power to a wheel of the hybrid electric vehicle, and the power battery supplies power to the power motor. The secondary motor is connected to the power motor, the DC-DC converter, and the power battery separately, and the secondary motor is actuated by the engine to generate power. As shown in Fig. 7, the power generation control method of a hybrid electric vehicle includes the following steps.

S10: Obtain an SOC value of the power battery and a vehicle speed of the hybrid electric vehicle.

It should be noted that the SOC value of the power battery may be collected through a battery management system of the hybrid electric vehicle, to obtain the SOC value of the power battery.

S20: Control the secondary motor to enter a generating power adjustment mode according to the SOC value of the power battery and the vehicle speed of the hybrid electric vehicle control, to enable the engine to operate in a preset optimal economic zone.

It should be further noted that the preset optimal economic zone of the engine may be determined with reference to the engine universal characteristic curve diagram. As shown in Fig. 1a, which is an example of an engine universal characteristic curve diagram, where a lateral ordinate is output torsion moment of the engine, a horizontal ordinate is a revolution speed of the engine, and a curve a is a fuel economy curve of the engine. A zone corresponding to the fuel economy curve is the optimal economic zone of the engine, that is, when the rotation moment and the torsion moment of the engine are located on an optimal fuel economy curve of the engine, the engine is located in the optimal economic zone. Therefore, in this embodiment of the present invention, the engine may be enabled to operate in the preset optimal economic zone by controlling the revolution speed and the output torsion moment of the engine to be located on the fuel economy curve of the engine, for example, the curve a.

Further, according to an embodiment of the present invention, in a traveling process of the hybrid electric vehicle, an SOC value of the power battery and a vehicle speed V of the hybrid electric vehicle are obtained, and the secondary motor is controlled, according to the SOC value of the power battery and the vehicle speed V of the hybrid electric vehicle, to enter a generating power adjustment mode, to enable the engine to operate in a preset optimal economic zone. The generating power adjustment mode is a mode of adjusting a generating power of the engine. In the generating power adjustment mode, the engine 1 may be controlled to actuate the secondary motor 5 to generate power to adjust the generating power of the secondary motor 5.

Specifically, in a traveling process of the hybrid electric vehicle, the engine may output power to the wheel of the hybrid electric vehicle through the clutch, and the engine may further actuate the secondary motor to generate power. Therefore, the output power of the engine mainly includes two parts: one part is output to the secondary motor, that is, the generating power that actuates the secondary motor to generate power, and the other part is output to the wheel, that is, the driving power that drive the wheel. When the engine actuates the secondary motor to generate power, an SOC value of the power battery and a vehicle speed of the hybrid electric vehicle may be obtained first, then, the secondary motor is controlled according to the SOC value of the power battery and the vehicle speed of the hybrid electric vehicle, to enter a generating power adjustment mode, to enable the engine to operate at a preset optimal economic zone. In the generating power adjustment mode, the generating power of the secondary motor may be adjusted on the premise of enabling the engine to operate in the preset optimal economic zone.

More specifically, in an embodiment of the present invention, the generating power of the secondary motor may be controlled according to the SOC value of the power battery and the vehicle speed of the hybrid electric vehicle, and the generating power of the engine is obtained according to the generating power of the secondary motor, to control the engine to operate at the preset optimal economic zone.

Therefore, the engine can be enabled to operate in the preset optimal economic zone. Because fuel consumption of the engine is lowest in the preset optimal economic zone, and fuel economy is highest, fuel consumption of the engine can be reduced, noise of the engine can be reduced, and economy of operation of the whole vehicle is improved. In addition, because the secondary motor has a relatively high generating power and relatively high generating efficiency at a low speed, a power demand of low-speed traveling can be satisfied, low-speed electric balance and low-speed smoothness of the whole vehicle can be maintained, and power performance of the whole vehicle can be improved. Power demands of the power motor and a high-voltage electrical device may be satisfied by charging the power battery, so as to ensure that the power motor drives the whole vehicle to normally travel.

Further, according to an embodiment of the present invention, when the SOC value of the power battery is greater than a preset limit value and is less than or equal to a first preset value, if the vehicle speed V of the hybrid electric vehicle is less than a first preset vehicle speed, the secondary motor is controlled to enter the generating power adjustment mode.

The first preset value may be a preset upper limit value of the SOC value of the power battery, for example, a determining value for stopping charging, preferably, 30%. The preset value may be a preset lower limit value of the SOC value of the power battery, for example, a determining value for stopping charging, preferably, 10%. The SOC value of the power battery may be classified into three ranges according to the first preset value and the preset limit value, namely, a first electricity quantity range, a second electricity quantity range, and a third electricity quantity range. When the SOC value of the power battery is less than or equal to the preset limit value, the SOC value of the power battery falls within the first electricity quantity range, and in this case, the power battery is only charged without being discharged. When the SOC value of the power battery is greater than the preset limit value and is less than or equal to the first preset value, the SOC value of the power battery falls within the second electricity quantity range, and in this case, the power battery has a charging demand, that is, the power battery may be actively charged. When the SOC value of the power battery is greater than the first preset value, the SOC value of the power battery falls within the third electricity quantity range, and in this case, the power battery may not be charged, that is, the power battery is not actively charged.

Specifically, after obtaining the SOC value of the power battery and the vehicle speed of the hybrid electric vehicle, a range of the SOC value of the power battery may be determined. If the SOC value of the power battery falls within the second electricity quantity range, and the SOC value of the power battery is greater than the preset limit value and is less than or equal to the first preset value, indicating that the power battery may be charged, whether the vehicle speed V of the hybrid electric vehicle is less than the first preset vehicle speed V1 is further determined, and if the vehicle speed V of the hybrid electric vehicle is less than the first preset vehicle speed V1, the secondary motor the controlled to enter the generating power adjustment mode. In this case, the vehicle speed of the hybrid electric vehicle is relatively low, and the required driving power is relatively low, so that the power motor is sufficient to drive the hybrid electric vehicle to travel, and the engine may only actuate the secondary motor to generate power and does not participate in driving.

As stated above, as shown in Fig. 8, in the power generation method of a hybrid electric vehicle of this embodiment of the present invention, the controlling, according to the SOC value M of the power battery and the vehicle speed V of the hybrid electric vehicle, the secondary motor to enter a generating power adjustment mode, specifically includes the following steps:
S101: Obtain the SOC value M of the power battery and the vehicle speed V of the hybrid electric vehicle.
S102: When the SOC value M of the power battery is greater than a preset limit value M2 and is less than or equal to a first preset value M1, obtain the vehicle speed V of the hybrid electric vehicle.
S103: When the vehicle speed V of the hybrid electric vehicle is less than a first preset vehicle speed V1, control the secondary motor to enter the generating power adjustment mode.

Therefore, the engine only generates power and does not participate in driving at a low speed. Because the engine does not participate in driving, the clutch does not need to be used, thereby reducing wear or slipping wear of the clutch while reducing jerks and improving comfortability.

Further, according to an embodiment of the present invention, when the SOC value of the power battery is greater than a preset limit value M2 and is less than or equal to a first preset value M1, and the vehicle speed V of the hybrid electric vehicle is less than a first preset vehicle speed V1, a vehicle required power P2 of the hybrid electric vehicle is further obtained, and when the vehicle required power P2 is less than or equal to a maximum allowable generating power Pmax of the secondary motor, the secondary motor is controlled to enter the generating power adjustment mode.

Specifically, in a traveling process of the hybrid electric vehicle, if the SOC value of the power battery is greater than a preset limit value M2 and is less than or equal to a first preset value M1, and the vehicle speed V of the hybrid electric vehicle is less than a first preset vehicle speed V1, that is, the vehicle speed of the hybrid electric vehicle is relatively low, a vehicle required power P2 of the hybrid electric vehicle is obtained, and when the vehicle required power P2 is less than or equal to a maximum allowable generating power Pmax of the secondary motor, the secondary motor is controlled to enter the generating power adjustment mode.

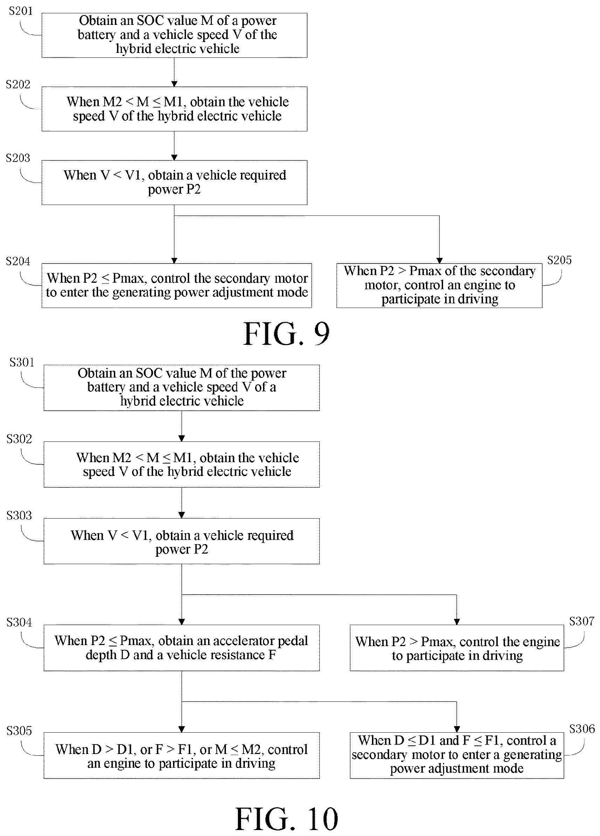

As stated above, as shown in Fig. 9, in the power generation method of a hybrid electric vehicle of this embodiment of the present invention, the controlling, according to the SOC value M of the power battery, the vehicle speed V, and the vehicle required power P2, the secondary motor to enter a generating power adjustment mode, specifically includes the following steps:
S201: Obtain the SOC value M of the power battery and the vehicle speed V of the hybrid electric vehicle.
S202: When the SOC value M of the power battery is greater than a preset limit value M2 and is less than or equal to a first preset value M1, obtain the vehicle speed V of the hybrid electric vehicle.
S203: When the vehicle speed V of the hybrid electric vehicle is less than a first preset vehicle speed V1, obtain a vehicle required power P2 of the hybrid electric vehicle.
S204: When the vehicle required power P2 is less than or equal to a maximum allowable generating power Pmax of the secondary motor, control the secondary motor to enter the generating power adjustment mode.
S205: When the vehicle required power P2 is greater than the maximum allowable generating power Pmax of the secondary motor, control the engine to participate in driving.

Therefore, the engine may only generate power and does not participate in driving at a low speed. Because the engine does not participate in driving, the clutch does not need to be used, thereby reducing wear or slipping wear of the clutch while reducing jerks and improving comfortability.

Further, according to an embodiment of the present invention, when the SOC value of the power battery is greater than the preset limit value and is less than or equal to the first preset value M1, the vehicle speed V of the hybrid electric vehicle is less than the first preset vehicle speed V1, and the vehicle required power P2 is less than or equal to the maximum allowable generating power Pmax of the secondary motor, obtain an accelerator pedal depth D of the hybrid electric vehicle and a vehicle resistance F of the hybrid electric vehicle, and when the accelerator pedal depth D is less than or equal to a first preset depth D1 and the vehicle resistance F of the hybrid electric vehicle is less than or equal to a first preset resistance F1, control the secondary motor to enter the generating power adjustment mode.

It should be noted that The vehicle resistance of the hybrid electric vehicle a traveling resistance of the hybrid electric vehicle such as a rolling resistance, an acceleration resistance, a slope resistance, and an air resistance.

Specifically, if the SOC value of the power battery is greater than the preset limit value and is less than or equal to the first preset value M1, the vehicle speed V of the hybrid electric vehicle is less than the first preset vehicle speed V1, and the vehicle required power P2 is less than or equal to the maximum allowable generating power Pmax of the secondary motor, an accelerator pedal depth D of the hybrid electric vehicle and a vehicle resistance F of the hybrid electric vehicle are obtained in real time, and when the accelerator pedal depth D is less than or equal to a first preset depth D1 and the vehicle resistance F of the hybrid electric vehicle is less than or equal to a first preset resistance F1, indicating that the hybrid electric vehicle operates in a low-speed mode, the secondary motor is controlled to enter the generating power adjustment mode.

Therefore, the engine may only generate power and does not participate in driving at a low speed. Because the engine does not participate in driving, the clutch does not need to be used, thereby reducing wear or slipping wear of the clutch while reducing jerks and improving comfortability.

As stated above, when the hybrid electric vehicle travels at a low speed, the engine 1 only generates power and does not participate in driving. Because the engine does not participate in driving, the clutch does not need to be used, thereby reducing wear or slipping wear of the clutch while reducing jerks and improving comfortability. In addition, the engine operates in an economic zone at a low speed. Because fuel consumption of the engine is lowest in the preset optimal economic zone, and fuel economy is highest, fuel consumption can be reduced, noise of the engine can be reduced, and economy of operation of the whole vehicle is improved. Therefore, low-speed electric balance and low-speed smoothness of the whole vehicle can be maintained, and performance of the whole vehicle can be improved.

According to an embodiment of the present invention, when controlling the engine to individually actuate the secondary motor to generate power and controlling the power motor to individually output driving power, the generating power P0 of the engine is obtained according to the following formula: $P 0 = P 1 / η / ζ$ P1 represents a generating power of the secondary motor, η represents belt transmission efficiency, and ζ represents efficiency of the secondary motor.

That is, in a case that the engine may only generate power and does not participate in driving, the generating power P0 of the engine may be calculated according to the generating power of the secondary motor, the belt transmission efficiency η, and the efficiency ζ of the secondary motor, and the engine is controlled to actuate, at the obtained generating power P0, the secondary motor to generate power, to control the generating power of the secondary motor.

Correspondingly, when the SOC value of the power battery, the vehicle speed V, the accelerator pedal depth D, and the vehicle resistance F of the hybrid electric vehicle do not satisfy the foregoing conditions, the engine may participate in driving, and a specific operating process thereof is as follows.

According to an embodiment of the present invention, when the SOC value of the power battery is less than the preset limit value, or the vehicle speed of the hybrid electric vehicle is greater than or equal to the first preset vehicle value, or the vehicle required power is greater than the maximum allowable generating power of the secondary motor, or the accelerator pedal depth is greater than the first preset depth, or the vehicle resistance of the hybrid electric vehicle is greater than the first preset resistance, control the engine to participate in driving.

That is, when the SOC value of the power battery is less than the preset limit value M2, or the vehicle speed of the hybrid electric vehicle is greater than or equal to the first preset vehicle value, or the vehicle required power is greater than the maximum allowable generating power of the secondary motor, or the accelerator pedal depth is greater than the first preset depth, or the vehicle resistance of the hybrid electric vehicle is greater than the first preset resistance, the engine is controlled to participate in driving. In this case, the power battery is no longer discharged, the driving power needed by the whole vehicle is relatively large, the vehicle required power is relatively large, the accelerator pedal depth is relatively large, or the vehicle resistance is relatively large, the power motor is insufficient to drive the hybrid electric vehicle to travel, and the engine participates in driving to supplement driving power.

Therefore, the engine can participate in driving when the driving power output by the power motor is insufficient, to ensure normal traveling of the whole vehicle, improve power performance of the whole vehicle, and increase a traveling distance of the whole vehicle.

More specifically, when the vehicle required power is greater than the maximum allowable generating power of the secondary motor, further control the engine to participate in driving to enable the engine to output power to the wheel through the clutch.

In addition, when the SOC value of the power battery is less than or equal to the preset limit value M2, the engine is further controlled to participate in driving to enable the engine to output power to the wheel through the clutch. When the SOC value of the power battery is less than or equal to the first preset value M1, the vehicle speed V of the hybrid electric vehicle is less than the first preset vehicle speed V1, and the accelerator pedal depth D is greater than the first preset depth D1, the engine is further controlled to participate in driving to enable the engine to output power to the wheel through the clutch. When the SOC value of the power battery is less than or equal to the first preset value M1, the vehicle speed V of the hybrid electric vehicle is less than the first preset vehicle speed V1, and the resistance F is greater than the first preset resistance F1, the engine is further controlled to participate in driving to enable the engine to output power to the wheel through the clutch.

Specifically, when the engine actuates the secondary motor to generate power, and the power motor outputs driving power to the wheel of the hybrid electric vehicle, the SOC value of the power battery, and the accelerator pedal depth D, the vehicle speed V, and the vehicle resistance F of the hybrid electric vehicle are obtained in real time, determining is performed on the SOC value of the power battery, and the accelerator pedal depth D, the vehicle speed V, and the vehicle resistance F of the hybrid electric vehicle, and the generating power of the secondary motor is adjusted according to the following three determining results.

First, when the SOC value of the power battery is less than the preset limit value M2, the engine is controlled to output power to the wheel through the clutch, to enable the engine and the power motor to both participate in driving, and reduce a load of the power motor to reduce power consumption of the power battery, thereby ensuring that the engine operates in the preset optimal economic zone while preventing the SOC value of the power battery from decreasing quickly.

First, when the SOC value of the power battery is less than or equal to the first preset value M1, the vehicle speed V of the hybrid electric vehicle is less than the first preset vehicle speed V1, and the accelerator pedal depth D is greater than the first preset depth D1, the engine is controlled to output power to the wheel through the clutch, to enable the engine and the power motor to both participate in driving, and reduce a load of the power motor to reduce power consumption of the power battery, thereby ensuring that the engine operates in the preset optimal economic zone while preventing the SOC value of the power battery from decreasing quickly.

Third, when the SOC value of the power battery is less than or equal to the first preset value M1, the vehicle speed V of the hybrid electric vehicle is less than the first preset vehicle speed V1, and the resistance F of the hybrid electric vehicle is greater than the first preset resistance F1, the engine is controlled to output power to the wheel through the clutch, to enable the engine and the power motor to both participate in driving, and reduce a load of the power motor to reduce power consumption of the power battery, thereby ensuring that the engine operates in the preset optimal economic zone while preventing the SOC value of the power battery from decreasing quickly.

As stated above, as shown in Fig. 10, in the power generation method of a hybrid electric vehicle of this embodiment of the present invention, the controlling, according to the SOC value M of the power battery, the vehicle speed V, and the vehicle required power P2, the secondary motor to enter a generating power adjustment mode, specifically includes the following steps:
S301: Obtain the SOC value M of the power battery and the vehicle speed V of the hybrid electric vehicle.
S302: When the SOC value M of the power battery is greater than a preset limit value M2 and is less than or equal to a first preset value M1, obtain the vehicle speed V of the hybrid electric vehicle.
S303: When the vehicle speed V of the hybrid electric vehicle is less than a first preset vehicle speed V1, obtain a vehicle required power P2 of the hybrid electric vehicle.
S304: When the vehicle required power P2 is less than or equal to a maximum allowable generating power Pmax of the secondary motor, obtain an accelerator pedal depth D of the hybrid electric vehicle and a vehicle resistance F of the hybrid electric vehicle.
S305: When the accelerator pedal depth D is greater than a first preset depth D1, or the vehicle resistance F of the hybrid electric vehicle is greater than a first preset resistance F1, or the SOC value of the power battery M is less than or equal to a preset limit value M2, control the engine to participate in driving to enable the engine to output power to the wheel through the clutch.
S306: When the accelerator pedal depth D is less than or equal to the first preset depth D1 and the vehicle resistance F of the hybrid electric vehicle is less than or equal to the first preset resistance F1, control the secondary motor to enter the generating power adjustment mode.
S307: When the vehicle required power P2 is greater than the maximum allowable generating power Pmax of the secondary motor, control the engine to participate in driving to enable the engine to output power to the wheel through the clutch.

Therefore, the engine can participate in driving when the driving power output by the power motor is insufficient, to ensure normal traveling of the whole vehicle, improve power performance of the whole vehicle, and increase a traveling distance of the whole vehicle. Therefore, the engine can be controlled to operate in an economic zone. Because fuel consumption of the engine in the preset optimal economic zone is lowest in the preset optimal economic zone, and fuel economy is highest, fuel consumption can be reduced, noise can be reduced, and economy of operation of the whole vehicle is improved.

In addition, when the SOC value of the power battery is less than the preset limit value, and the vehicle speed of the hybrid electric vehicle is greater than the first preset vehicle speed, the engine is controlled to participate in driving to enable the engine to output power to the wheel through the clutch.

Therefore, the engine can participate in driving when the driving power output by the power motor is insufficient, to ensure normal traveling of the whole vehicle, improve power performance of the whole vehicle, and increase a traveling distance of the whole vehicle.

Certainly, it should be understood that when the SOC value of the power battery is greater than the first preset value, the engine does not actuate the secondary motor to generate power. In this case, the electricity quantity of the power battery is close to a full state, and does not need to be charged, and the engine does not actuate the secondary motor to generate power. That is, when the electricity quantity of the power battery is close to a full state, the engine does not actuate the secondary motor to generate power, so that the secondary motor does not charge the power battery.

Further, after the secondary motor enters the generating power adjustment mode, the generating power of the secondary motor may be adjusted. A generating power adjustment process in this embodiment of the present invention is specifically described below.

According to an embodiment of the present invention, after the secondary motor enters the generating power adjustment mode, a generating power P1 of the secondary motor is adjusted according to the vehicle required power P2 of the hybrid electric vehicle and a charging power P3 of the power battery.

According to an embodiment of the present invention, a formula for adjusting the generating power P1 of the secondary motor according to the vehicle required power P2 of the hybrid electric vehicle and the charging power P3 of the power battery is as follows: $P 1 = P 2 + P 3 , where P 2 = P 11 + P 21$ P1 is the generating power of the secondary motor, P2 is the vehicle required power, P3 is the charging power of the power battery, P11 is a vehicle driving power, and P21 is an electric device power.

It should be noted that the electric device includes a first electric device and a second electric device, that is, the electric device power P21 may include required powers of a high-voltage electric device and a low-voltage electric device.

It should be further noted that the vehicle driving power P11 may include an output power of the power motor 2. The vehicle driving power P11 may be obtained according to a preset accelerator-rotation moment curve of the power motor and a revolution speed of the power motor, where the preset accelerator-rotation moment curve may be determined during power matching of the hybrid electric vehicle. In addition, an electric device power P21 may be obtained in real time according to electric devices operating in the whole vehicle, for example, the electric device power P21 is calculated according to the DC consumption on the bus. In addition, the charging power P3 of the power battery may be obtained according to the SOC value of the power battery. Assuming that the vehicle driving power that is obtained in real time is P11 = b1 kw, the electric device power is P21 = b2 kw, and the charging power of the power battery is P3 = b3 kw, the generating power of the secondary motor = b1 + b2 + b3.

Specifically, in a traveling process of the hybrid electric vehicle, the charging power P3 of the power battery, the vehicle driving power P11, and the electric device power P21 may be obtained, and a sum of the charging power P3 of the power battery, the vehicle driving power P11, and the electric device power P21 is used as the generating power P1 of the secondary motor 5. Therefore, the generating power of the secondary motor may be adjusted according to the calculated value of P1. For example, the output torsion moment and the revolution speed of the engine may be controlled according to the calculated value of P1, to adjust the power at which the engine actuates the secondary motor to generate power.

Further, according to an embodiment of the present invention, that a generating power of the secondary motor is adjusted includes: obtaining an SOC value change rate of the power battery, and adjusting the generating power of the secondary motor according to a relationship between the vehicle required power P2 and a minimum output power Pmin corresponding to an optimal economic zone of the engine and the SOC value change rate of the power battery.

It should be understood that the SOC value change rate of the power battery may be obtained according to the SOC value of the power battery, for example, an SOC value of the power battery is collected once every time interval t. In this way, a ratio of a difference between a current SOC value of the power battery and a previous SOC value to the time interval t is used as the SOC value change rate of the power battery 3.

Specifically, the optimal economic zone of the engine may be determined according to the engine universal characteristic curve shown in Fig. 1a, to further obtain a minimum output power Pmin corresponding to the optimal economic zone of the engine. After determining the minimum output power Pmin corresponding to the optimal economic zone of the engine, the generating power of the secondary motor 5 may be adjusted according to a relationship between the vehicle required power P2 and the minimum output power Pmin corresponding to the optimal economic zone of the engine and the SOC value change rate of the power battery.

Therefore, when the hybrid electric vehicle travels at a low speed, the engine is enabled to operate in an economic zone, so that fuel consumption can be reduced, noise of the engine can be reduced, and economy of operation of the whole vehicle is improved. In addition, the engine only generates power and does not participate in driving at a low speed. Because the engine does not participate in driving, the clutch does not need to be used, thereby reducing wear or slipping wear of the clutch while reducing jerks and improving comfortability. Therefore, low-speed electric balance and low-speed smoothness of the whole vehicle can be maintained, and performance of the whole vehicle can be improved.

A specific adjustment manner in which after the secondary motor enters the generating power adjustment mode, the generating power of the secondary motor is adjusted according to a relationship between the vehicle required power P2 and the minimum output power Pmin corresponding to the optimal economic zone of the engine and the SOC value change rate of the power battery is further described below.

Specifically, when the engine actuates the secondary motor to generate power and the power motor outputs driving power to the wheel of the hybrid electric vehicle, the vehicle driving power P11 and the electric device power P21 are obtained in real time, to obtain the vehicle required power P2 of the hybrid electric vehicle. The vehicle required power P2 of the hybrid electric vehicle is determined, where the vehicle required power P2 may satisfy the following three cases.

First case: the vehicle required power P2 is less than the minimum output power Pmin corresponding to the optimal economic zone of the engine. Second case: the vehicle required power P2 is greater than or equal to the minimum output power Pmin corresponding to the optimal economic zone of the engine and is less than or equal to the maximum allowable generating power Pmax of the secondary motor. Third case: the vehicle required power P2 is greater than the maximum allowable generating power Pmax of the secondary motor.

In an embodiment of the first case, when the vehicle required power P2 is less than the minimum output power Pmin corresponding to the optimal economic zone of the engine, the charging power P3 of the power battery is obtained according to the SOC value change rate of the power battery, and whether the charging power P3 of the power battery is less than a difference between the minimum output power Pmin and the vehicle required power P2 is determined. If the charging power P3 of the power battery is less than the difference between the minimum output power Pmin and the vehicle required power P2, the generating power P1 of the secondary motor is adjusted by controlling the engine to generate power at the minimum output power Pmin. If the charging power P3 of the power battery 3 is greater than or equal to the difference between the minimum output power Pmin and the vehicle required power P2, an output power of the engine within the preset optimal economic zone is obtained according to a sum of the charging power P3 of the power battery and the vehicle required power P2, and the generating power P1 of the secondary motor is adjusted by controlling the engine to generate power at the obtained output power.

It should be noted that a first relationship table between the SOC value change rate of the power battery and the charging power P3 of the power battery may be pre-stored. Therefore, after obtaining the SOC value change rate of the power battery, the corresponding charging power P3 of the power battery may be obtained by performing comparison in the first relationship table. The SOC value change rate of the power battery and the charging power P3 of the power battery satisfy the relationships shown in Table 1.

**Table 1**

| | | | | | |
|---|---|---|---|---|---|
| SOC value change rate of the power battery 3 | A1 | A2 | A3 | A4 | A5 |
| Charging power P3 of the power battery 3 | B1 | B2 | B3 | B4 | B5 |

It can be learned from Table 1 that when the obtained SOC value change rate is A1, the obtained corresponding charging power P3 of the power battery is B1; when the obtained SOC value change rate is A2, the obtained corresponding charging power P3 of the power battery is B2; when the obtained SOC value change rate is A3, the obtained corresponding charging power P3 of the power battery is B3; when the obtained SOC value change rate is A4, the obtained corresponding charging power P3 of the power battery is B4; and when the obtained SOC value change rate is A5, the obtained corresponding charging power P3 of the power battery is B5.

Specifically, after the secondary motor enters the generating power adjustment mode, the vehicle driving power P11 and the electric device power P21 are obtained in real time, to obtain the vehicle required power P2 of the hybrid electric vehicle, and the vehicle required power P2 of the hybrid electric vehicle is determined. When the vehicle required power P2 is less than the minimum output power Pmin corresponding to the optimal economic zone of the engine, a charging power P3 of the power battery is obtained according to the SOC value change rate of the power battery, and whether the charging power P3 of the power battery is less than a difference between the minimum output power Pmin and the vehicle required power P2 is determined.

When the vehicle required power P2 is less than the minimum output power Pmin corresponding to the optimal economic zone of the engine, if the charging power P3 of the power battery is less than the difference between the minimum output power Pmin and the vehicle required power P2, that is, P3 < Pmin - P2, the generating power of the secondary motor 5 is adjusted by controlling the engine to generate power at the minimum output power Pmin. If the charging power P3 of the power battery is greater than or equal to the difference between the minimum output power Pmin and the vehicle required power P2, that is, P3 ≥ Pmin - P2, an output power of the engine within the preset optimal economic zone is obtained according to a sum of the charging power P3 of the power battery 3 and the vehicle required power P2, and the generating power of the secondary motor is adjusted by controlling the engine to generate power at the obtained output power.

When the vehicle required power P2 is less than the minimum output power Pmin corresponding to the optimal economic zone of the engine, the generating power of the engine is obtained according to a relationship between the charging power P3 of the power battery and a difference between the minimum output power Pmin corresponding to the optimal economic zone of the engine and the vehicle required power P2, to enable the engine to operate at the preset optimal economic zone. In addition, the engine only generates power and does not participate in driving. Therefore, fuel consumption of the engine can be reduced, and noise of the engine can be reduced.

In an embodiment of the second case, when the vehicle required power P2 is greater than or equal to the minimum output power Pmin corresponding to the optimal economic zone of the engine and is less than or equal to the maximum allowable generating power Pmax of the secondary motor, the charging power P3 of the power battery is obtained according to the SOC value change rate of the power battery, an output power P4 of the engine within the preset optimal economic zone is obtained according to a sum of the charging power P3 of the power battery and the vehicle required power P2, and the generating power P1 of the secondary motor is adjusted by controlling the engine to generate power at the obtained output power P4.

Specifically, when the vehicle required power P2 is greater than or equal to the minimum output power Pmin corresponding to the optimal economic zone of the engine and is less than the maximum allowable generating power Pmax of the secondary motor, the charging power P3 of the power battery is further obtained according to the SOC value change rate of the power battery when the engine is controlled to operate in the preset optimal economic zone, and the output power P4 of the engine within the preset optimal economic zone is obtained according to the sum of the charging power P3 of the power battery and the vehicle required power P2, where the obtained output power is P4 = P3 + P2. Further, the engine is controlled to generate power at the obtained output power P4 to adjust the generating power P1 of the secondary motor, so as to increase the SOC value of the power battery and enable the engine to operate in the preset optimal economic zone.

Therefore, when the vehicle required power P2 is greater than or equal to the minimum output power Pmin corresponding to the optimal economic zone of the engine and is less than the maximum allowable generating power Pmax of the secondary motor, the output power of the engine is obtained according to a sum of the charging power P3 of the power battery and the vehicle required power P2, to enable the engine to operate at the preset optimal economic zone. In addition, the engine only generates power and does not participate in driving. Therefore, fuel consumption of the engine can be reduced, and noise of the engine can be reduced.

In an embodiment of the third case, when the vehicle required power P2 is greater than the maximum allowable generating power Pmax of the secondary motor, the engine is further controlled to participate in driving to enable the engine to output power to the wheel through the clutch.

Specifically, when the vehicle required power P2 is greater than the maximum allowable generating power Pmax of the secondary motor, that is, when the vehicle required power P2 of the hybrid electric vehicle is higher than the generating power P1 of the secondary motor, the engine is further controlled to output driving power to the wheel through the clutch to enable the engine to participate in driving, so that the engine bears partial driving power P', to reduce a demand for the generating power P1 of the secondary motor, and enable the engine to operate in the preset optimal economic zone.

Therefore, when the vehicle required power P2 is greater than the maximum allowable generating power Pmax of the secondary motor, the power battery is externally discharged to supply power to the power motor. In this case, both the engine and the power motor are controlled to output power to the wheel of the hybrid electric vehicle, to enable the engine to operate in the preset optimal economic zone.

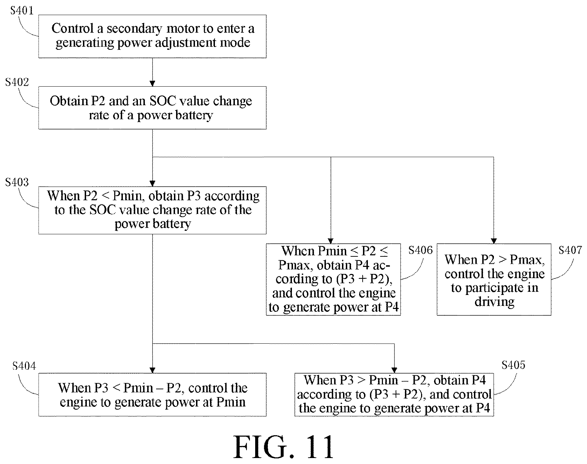

As stated above, as shown in Fig. 11, In the power generation control method of a hybrid electric vehicle of this embodiment of the present invention, after the secondary motor enters the generating power adjustment mode, the generating power of the secondary motor may be adjusted, which specifically includes the following steps:
S401: Control the secondary motor to enter the generating power adjustment mode.
S402: Obtain a vehicle required power P2 of the hybrid electric vehicle and an SOC value change rate of a power battery.
S403: When the vehicle required power P2 is less than a minimum output power Pmin corresponding to an optimal economic zone of the engine, obtain a charging power P3 of the power battery according to the SOC value change rate of the power battery.
S404: If the charging power P3 of the power battery is less than a difference between the minimum output power Pmin and the vehicle required power P2, adjust the generating power of the secondary motor by controlling the engine to generate power at the minimum output power Pmin.
S405: If the charging power P3 of the power battery is greater than or equal to the difference between the minimum output power Pmin and the vehicle required power P2, obtain an output power P4 of the engine within the preset optimal economic zone according to a sum of the charging power P3 of the power battery and the vehicle required power P2, and adjust the generating power P1 of the secondary motor by controlling the engine to generate power at the obtained output power P4.
S406: When the vehicle required power P2 is greater than or equal to the minimum output power Pmin corresponding to the optimal economic zone of the engine and is less than or equal to the maximum allowable generating power Pmax of the secondary motor, obtain the charging power P3 of the power battery according to the SOC value change rate of the power battery, obtain an output power P4 of the engine within the preset optimal economic zone according to a sum of the charging power P3 of the power battery and the vehicle required power P2, and adjust the generating power P1 of the secondary motor by controlling the engine to generate power at the obtained output power P4.
S407: When the vehicle required power P2 is greater than the maximum allowable generating power Pmax of the secondary motor, control the engine to participate in driving to enable the engine to output power to the wheel through the clutch.

Therefore, the engine can operate in an economic zone at a low speed, may only generate power, and does not participate in driving, so that the clutch is not used, thereby reducing wear or slipping wear of the clutch while reducing jerks and improving comfortability. In addition, fuel consumption is reduced, and engine noise is reduced. Further low-speed electric balance and low-speed smoothness of the whole vehicle are maintained, and performance of the whole vehicle is improved.

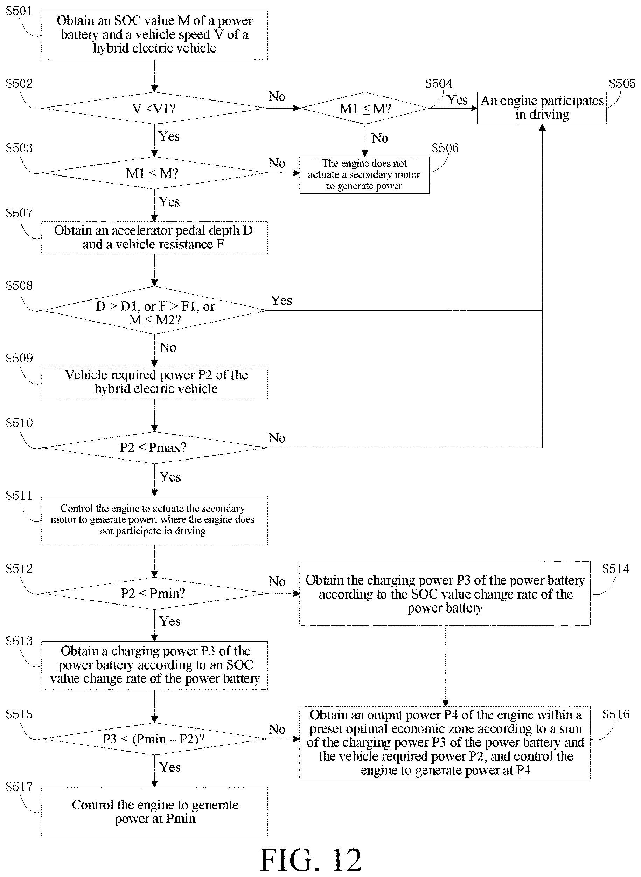

As stated above, as shown in Fig. 12, the power generation control method of a hybrid electric vehicle of this embodiment of the present invention specifically includes the following steps.
S501: Obtain an SOC value M of a power battery and a vehicle speed V of the hybrid electric vehicle.
S502: Determine whether the vehicle speed V of the hybrid electric vehicle is less than a first preset vehicle speed V1.

If yes, step S503 is performed. If not, step S504 is performed.

S503: Determine whether the SOC value M of the power battery is less than or equal to a first preset SOC value M1.

If yes, step S507 is performed. If not, step S506 is performed.

S504: Determine whether the SOC value M of the power battery is less than or equal to the first preset SOC value M1.

If yes, step S505 is performed. If not, step S506 is performed.

S505: Control an engine to participate in driving.

S506: Control the engine to not actuate a secondary motor to generate power.

S507: Obtain an accelerator pedal depth D of the hybrid electric vehicle and a vehicle resistance F of the hybrid electric vehicle.

S508: Determine whether the accelerator pedal depth D is greater than a first preset depth D1, or whether the vehicle resistance F of the hybrid electric vehicle is greater than a first preset resistance F1, or the SOC value M of the power battery is less than the preset limit value M2.

If yes, step S505 is performed. If not, step S509 is performed.

S509: Obtain a vehicle required power P2 of the hybrid electric vehicle.

S510: Determine whether the vehicle required power P2 is greater than a maximum allowable generating power Pmax of the secondary motor.

If yes, step S511 is performed. If not, step S505 is performed.

S511: Control the engine to actuate the secondary motor to generate power, where the engine does not participate in driving.

In this case, the secondary motor is controlled to enter a generating power adjustment mode.

S512: Determine whether the vehicle required power P2 is less than a minimum output power Pmin corresponding to an optimal economic zone of the engine.

If yes, step S513 is performed. If not, step S514 is performed.

S513: Obtain a charging power P3 of the power battery according to an SOC value change rate of the power battery, and perform step S515.

S514: Obtain the charging power P3 of the power battery according to the SOC value change rate of the power battery, and perform step S516.

S515: Determine whether the charging power P3 of the power battery is less than a difference between the minimum output power Pmin and the vehicle required power P2.

If yes, step S517 is performed. If not, step S516 is performed.

S516: Obtain an output power P4 of the engine within the preset optimal economic zone according to a sum of the charging power P3 of the power battery and the vehicle required power P2, and control the engine to generate power at the obtained output power P4.

S517: Control the engine to generate power at the minimum output power Pmin.

In conclusion, according to the power generation control method of a hybrid electric vehicle, an SOC value of the power battery and a vehicle speed of the hybrid electric vehicle are first obtained, and the secondary motor is controlled according to the SOC value of the power battery and the vehicle speed control of the hybrid electric vehicle, to enter a generating power adjustment mode, to enable the engine to operate in a preset optimal economic zone. Therefore, fuel consumption of the engine can be reduced, economy of operation of the whole vehicle is improved, and noise of the engine can be reduced. In addition, a plurality of driving modes can be implemented, low-speed electric balance and low-speed smoothness of the whole vehicle can be maintained, and performance of the whole vehicle can be improved.

The aforementioned storage medium may be a read-only memory, a magnetic disk or an optical disc. Although the embodiments of the present invention are shown and described above, it can be understood that, the foregoing embodiments are exemplary, and cannot be construed as a limitation to the present invention. Within the scope of the present invention, a person of ordinary skill in the art may make changes, modifications, replacement, and variations to the foregoing embodiments, as long as they fall within the scope defined by the appended claims.

## Claims

1. A power system of a hybrid electric vehicle, comprising:
an engine (1), configured to output power to a wheel (7) of the hybrid electric vehicle through a clutch (6);
a power motor (2), configured to output driving power to a wheel (7) of the hybrid electric vehicle;
a power battery (3), configured to supply power to the power motor (2);
a DC-DC converter (4);
a secondary motor (5), connected to the engine (1), wherein the secondary motor is connected to the power motor (2), the DC-DC converter (4), and the power battery (3) separately, and the secondary motor is driven by the engine (1) to generate power; and
a control module, configured to obtain an SOC value of the power battery (3) and a vehicle speed of the hybrid electric vehicle, and control, according to the SOC value of the power battery (3) and the vehicle speed of the hybrid electric vehicle, the secondary motor to enter a generating power adjustment mode, to enable the engine (1) to operate in a preset optimal economic zone,
wherein the secondary motor (5) is configured to start the engine (1), and
wherein in the generating power adjustment mode, the engine (1) is configured to actuate the secondary motor (5) to generate power and not to participate in driving, when the vehicle is travelling at low speed;
wherein the control module is further configured to: after the secondary motor enters the generating power adjustment mode, adjust a generating power of the secondary motor according to a
vehicle required power of the hybrid electric vehicle and a charging power of the power battery (3);
wherein a formula for adjusting the generating power of the secondary motor according to the vehicle required power of the hybrid electric vehicle and the charging power of the power battery (3) is as follows: $P 1 = P 2 + P 3 , wherein P 2 = P 11 + P 21$
P1 is the generating power of the secondary motor, P2 is the vehicle required power, P3 is the charging power of the power battery (3), P11 is a vehicle driving power, and P21 is an electric device power.

2. The power system of a hybrid electric vehicle according to claim 1, wherein the control module is configured to: when the SOC value of the power battery (3) is greater than a preset limit value and is less than or equal to a first preset value, if the vehicle speed of the hybrid electric vehicle is less than a first preset vehicle speed, control the secondary motor to enter the generating power adjustment mode.

3. The power system of a hybrid electric vehicle according to claim 1 or 2, wherein the control module is further configured to: when the SOC value of the power battery (3) is greater than a preset limit value and is less than or equal to a first preset value, and the vehicle speed of the hybrid electric vehicle is less than a first preset vehicle speed, obtain the vehicle required power of the hybrid electric vehicle, and when the vehicle required power is less than or equal to a maximum allowable generating power of the secondary motor, control the secondary motor to enter the generating power adjustment mode.

4. The power system of a hybrid electric vehicle according to claim 3, wherein the control module is further configured to: when the SOC value of the power battery (3) is greater than the preset limit value and is less than or equal to the first preset value, the vehicle speed of the hybrid electric vehicle is less than the first preset vehicle speed, and the vehicle required power is less than or equal to the maximum allowable generating power of the secondary motor, obtain an accelerator pedal depth of the hybrid electric vehicle and a vehicle resistance of the hybrid electric vehicle, and when the accelerator pedal depth is less than or equal to a first preset depth and the vehicle resistance of the hybrid electric vehicle is less than or equal to a first preset resistance, control the secondary motor to enter the generating power adjustment mode.

5. The power system of a hybrid electric vehicle according to any one of the preceding claims, wherein the control module is further configured to: obtain an SOC value change rate of the power battery (3), and adjust the generating power of the secondary motor according to a relationship between the vehicle required power and a minimum output power corresponding to an optimal economic zone of the engine (1) and the SOC value change rate of the power battery (3).

6. The power system of a hybrid electric vehicle according to claim 5, wherein the control module is further configured to: when the vehicle required power is less than the minimum output power corresponding to the optimal economic zone of the engine (1), obtain the charging power of the power battery (3) according to the SOC value change rate of the power battery (3), and determine whether the charging power of the power battery (3) is less than a difference between the minimum output power and the vehicle required power, wherein
if the charging power of the power battery (3) is less than the difference between the minimum output power and the vehicle required power, the generating power of the secondary motor is adjusted by controlling the engine (1) to generate power at the minimum output power; or
if the charging power of the power battery (3) is greater than or equal to the difference between the minimum output power and the vehicle required power, an output power of the engine (1) within the preset optimal economic zone is obtained according to a sum of the charging power of the power battery (3) and the vehicle required power, and the generating power of the secondary motor is adjusted by controlling the engine (1) to generate power at the obtained output power; or wherein the control module is further configured to: when the vehicle required power is greater than or equal to the minimum output power corresponding to the optimal economic zone of the engine (1) and is less than or equal to the maximum allowable generating power of the secondary motor, obtain the charging power of the power battery (3) according to the SOC value change rate of the power battery (3), obtain an output power of the engine (1) within the preset optimal economic zone according to a sum of the charging power of the power battery (3) and the vehicle required power, and adjust the generating power of the secondary motor by controlling the engine (1) to generate power at the obtained output power; or
wherein the control module is further configured to: when the vehicle required power is greater than the maximum allowable generating power of the secondary motor, further control the engine (1) to participate in driving to enable the engine (1) to output power to the wheel (7) through the clutch (6).

7. The power system of a hybrid electric vehicle according to any one of the preceding claims, wherein the engine (1) and the power motor (2) drive a same wheel (7) of the hybrid electric vehicle together; or
wherein the wheel (7) of the hybrid electric vehicle comprises a first wheel (7) and a second wheel (7);
the engine (1) is configured to output power to the first wheel (7) of the hybrid electric vehicle through the clutch (6); and
the power motor (2) is configured to output driving power to the second wheel (7) of the hybrid electric vehicle.

## Patentansprüche

1. Antriebssystem eines Hybrid-Elektrofahrzeugs, umfassend:
einen Motor bzw. Verbrennungsmotor (1), der dazu konfiguriert ist, dass er über eine Kupplung (6) Antriebsleistung an ein Rad (7) des Hybrid-Elektrofahrzeugs abgibt;
einen Antriebsmotor bzw. Leistungsmotor (2), der dazu konfiguriert ist, Antriebsleistung an ein Rad (7) des Hybrid-Elektrofahrzeugs abzugeben;
eine Antriebsbatterie (3), die dazu konfiguriert ist, dem Antriebsmotor (2) Energie zuführen zu können;
einen DC-DC-Wandler (4);
einen Sekundärmotor (5), der mit dem Verbrennungsmotor (1) verbunden ist, wobei der Sekundärmotor separat mit dem Antriebsmotor (2), dem DC-DC-Wandler (4) und der Antriebsbatterie (3) verbunden ist und der Sekundärmotor vom Verbrennungsmotor (1) angetrieben wird, um Leistung zu erzeugen; und
ein Steuermodul, das dazu konfiguriert ist, einen SOC-Wert der Antriebsbatterie (3) und eine Fahrzeuggeschwindigkeit des Hybrid-Elektrofahrzeugs zu ermitteln und entsprechend dem SOC-Wert der Antriebsbatterie (3) und der Fahrzeuggeschwindigkeit des Hybrid-Elektrofahrzeugs den Sekundärmotor so zu steuern, dass er in einen Stromerzeugungs- bzw. Stromgenerator- bzw. Erzeugungsleistungsanpassungsmodus eintritt, damit der Verbrennungsmotor (1) in einem voreingestellten optimalen Wirtschaftlichkeitsbereich betrieben werden kann,
wobei der Sekundärmotor (5) dazu konfiguriert ist, den Motor (1) zu starten, und
wobei in dem Stromerzeugungsanpassungsmodus der Motor (1) dazu konfiguriert ist, den Sekundärmotor (5) zur Stromerzeugung anzutreiben und nicht am Antrieb beteiligt zu sein, wenn das Fahrzeug mit niedriger Geschwindigkeit fährt;
wobei das Steuermodul ferner dazu konfiguriert ist, dass es, nachdem der Sekundärmotor in den Stromerzeugungsanpassungsmodus übergegangen ist, eine Erzeugungsleistung des Sekundärmotors entsprechend der vom Hybrid-Elektrofahrzeug benötigten Leistung und der Ladeleistung der Antriebsbatterie (3) anpasst;
wobei eine Formel zur Anpassung der Erzeugungsleistung des Sekundärmotors entsprechend dem Leistungsbedarf des Hybrid-Elektrofahrzeugs und der Ladeleistung der Antriebsbatterie (3) wie folgt lautet: $P 1 = P 2 + P 3 , wobei P 2 = P 11 + P 21$
P1 ist die Erzeugungsleistung des Sekundärmotors, P2 ist die Leistung, die durch das Fahrzeug benötigt wird, P3 ist die Ladeleistung der Antriebsbatterie (3), P11 ist die Antriebsleistung des Fahrzeugs und P21 ist die Leistung der elektrischen Verbraucher.

2. Antriebssystem eines Hybrid-Elektrofahrzeugs gemäß Anspruch 1, wobei das Steuermodul dazu konfiguriert ist, dass es, wenn der SOC-Wert der Antriebsbatterie (3) größer als ein voreingestellter Grenzwert und kleiner oder gleich einem ersten voreingestellten Wert ist und wenn die Fahrzeuggeschwindigkeit des Hybrid-Elektrofahrzeugs kleiner als eine erste voreingestellte Fahrzeuggeschwindigkeit ist, den Sekundärmotor so steuert, dass er in den Stromerzeugungsanpassungsmodus eintritt.

3. Antriebssystem eines Hybrid-Elektrofahrzeugs gemäß Anspruch 1 oder 2, wobei das Steuermodul ferner dazu konfiguriert ist, dass es: wenn der SOC-Wert der Antriebsbatterie (3) größer als ein voreingestellter Grenzwert und kleiner oder gleich einem ersten voreingestellten Wert ist, und die Fahrzeuggeschwindigkeit des Hybrid-Elektrofahrzeugs unter einer ersten voreingestellten Fahrzeuggeschwindigkeit liegt, die vom Fahrzeug benötigte Leistung des Hybrid-Elektrofahrzeugs ermittelt, und, wenn die vom Fahrzeug benötigte Leistung kleiner oder gleich einer maximal zulässigen Erzeugungsleistung des Sekundärmotors ist, den Sekundärmotor so zu steuern, dass er in den Stromerzeugungsanpassungsmodus eintritt.

4. Antriebssystem eines Hybrid-Elektrofahrzeugs gemäß Anspruch 3, wobei das Steuermodul ferner dazu konfiguriert ist, dass es: wenn der SOC-Wert der Antriebsbatterie (3) größer als der voreingestellte Grenzwert und kleiner oder gleich dem ersten voreingestellten Wert ist, die Fahrzeuggeschwindigkeit des Hybrid-Elektrofahrzeugs kleiner als die erste voreingestellte Fahrzeuggeschwindigkeit ist, und die Bedingung ist, dass die erforderliche Fahrzeugleistung kleiner oder gleich der maximal zulässigen Erzeugungsleistung des Sekundärmotors ist, eine Gaspedalstellung des Hybrid-Elektrofahrzeugs und einen Fahrzeugwiderstand des Hybrid-Elektrofahrzeugs ermittelt, und wenn die Gaspedalstellung kleiner oder gleich einer ersten voreingestellten Stellung ist und der Fahrzeugwiderstand des Hybrid-Elektrofahrzeugs kleiner oder gleich einem ersten voreingestellten Widerstand ist, den Sekundärmotor so zu steuern, dass er in den Stromerzeugungsanpassungsmodus eintritt.

5. Antriebssystem eines Hybrid-Elektrofahrzeugs gemäß einem der vorstehenden Ansprüche, wobei das Steuermodul ferner dazu konfiguriert ist, dass es: eine Änderungsrate des SOC-Werts der Antriebsbatterie (3) ermittelt und die Erzeugungsleistung des Sekundärmotors entsprechend einer Beziehung zwischen der durch das Fahrzeug benötigten Leistung und einer Mindestausgangsleistung, die einem optimalen Wirtschaftlichkeitsbereich des Motors (1) entspricht, sowie der Änderungsrate des SOC-Werts der Antriebsbatterie (3) anpasst.

6. Antriebssystem eines Hybrid-Elektrofahrzeugs gemäß Anspruch 5, wobei das Steuermodul ferner dazu konfiguriert ist, dass es: wenn der durch das Fahrzeug benötigte Strom geringer ist als die der optimalen Wirtschaftlichkeitszone des Motors (1) entsprechende Mindestausgangsleistung, die Ladeleistung der Antriebsbatterie (3) gemäß der Änderungsrate des SOC-Werts der Antriebsbatterie (3) ermittelt, und bestimmt, ob die Ladeleistung der Antriebsbatterie (3) kleiner ist als die Differenz zwischen der Mindestausgangsleistung und der Bedingung für die Leistung, wobei
wenn die Ladeleistung der Antriebsbatterie (3) kleiner ist als die Differenz zwischen der Mindestausgangsleistung und der durch das Fahrzeug benötigten Leistung, die Erzeugungsleistung des Sekundärmotors durch Steuerung des Motors (1) so angepasst wird, dass dieser Leistung mit der Mindestausgangsleistung erzeugt; oder
falls die Ladeleistung der Antriebsbatterie (3) größer oder gleich der Differenz zwischen der Mindestausgangsleistung und dem vom Fahrzeug benötigten Leistungsbedarf ist, eine Ausgangsleistung des Motors (1) innerhalb des voreingestellten optimalen Wirtschaftlichkeitsbereichs entsprechend der Summe aus der Ladeleistung der Antriebsbatterie (3) und dem vom Fahrzeug benötigten Leistungsbedarf ermittelt wird, und die Erzeugungsleistung des Sekundärmotors durch Steuerung des Motors (1) so angepasst wird, dass dieser bei der ermittelten Ausgangsleistung Leistung erzeugt; oder
wobei das Steuermodul ferner dazu konfiguriert ist, dass es: wenn der Fahrzeugleistungsbedarf größer oder gleich der der optimalen Wirtschaftlichkeitszone des Motors (1) entsprechenden Mindestausgangsleistung und kleiner oder gleich der maximal zulässigen Erzeugungsleistung des Sekundärmotors ist, die Ladeleistung der Antriebsbatterie (3) entsprechend der SOC-Änderungsrate der Antriebsbatterie (3) ermittelt, eine Ausgangsleistung des Motors (1) innerhalb des voreingestellten optimalen Wirtschaftlichkeitsbereichs entsprechend der Summe aus der Ladeleistung der Antriebsbatterie (3) und der von dem Fahrzeug benötigten Leistung ermittelt und die Erzeugungsleistung des Sekundärmotors durch Steuerung des Motors (1) so anpasst, dass dieser die ermittelte Ausgangsleistung liefert; oder
wobei das Steuermodul ferner dazu konfiguriert ist, dass es, wenn der vom Fahrzeug benötigte Strom größer ist als die maximal zulässige Erzeugungsleistung des Sekundärmotors, den Motor (1) zusätzlich so steuert, dass er am Antrieb mitwirkt, um es dem Motor (1) zu ermöglichen, über die Kupplung (6) Leistung an das Rad (7) abzugeben.

7. Antriebssystem eines Hybrid-Elektrofahrzeugs gemäß einem der vorstehenden Ansprüche, wobei der Motor (1) und der Antriebsmotor (2) gemeinsam ein und dasselbe Rad (7) des Hybrid-Elektrofahrzeugs antreiben; oder
wobei das Rad (7) des Hybrid-Elektrofahrzeugs ein erstes Rad (7) und ein zweites Rad (7) umfasst; der Motor (1) ist dazu konfiguriert, dass er über die Kupplung (6) Antriebsleistung an das erste Rad (7) des Hybrid-Elektrofahrzeugs abgibt; und
der Antriebsmotor (2) ist dazu konfiguriert, Antriebsleistung an das zweite Rad (7) des Hybrid-Elektrofahrzeugs abzugeben.

## Revendications

1. Système de propulsion d'un véhicule électrique hybride, comprenant :
un moteur à combustion (1), configuré pour fournir de la puissance à une roue (7) du véhicule électrique hybride par l'intermédiaire d'un embrayage (6) ;
un moteur électrique (2), configuré pour fournir une puissance d'entraînement à une roue (7) du véhicule électrique hybride ;
une batterie d'alimentation (3), configurée pour fournir de l'énergie au moteur électrique (2) ;
un convertisseur CC-CC (4) ;
un moteur secondaire (5), relié au moteur à combustion (1), dans lequel le moteur secondaire est relié séparément au moteur électrique (2), au convertisseur CC-CC (4) et à la batterie d'alimentation (3), et le moteur secondaire est entraîné par le moteur à combustion (1) pour générer de l'énergie ; et
un module de commande, configuré pour obtenir une valeur SOC de la batterie d'alimentation (3) et une vitesse du véhicule électrique hybride, et pour commander, selon la valeur SOC de la batterie d'alimentation (3) et la vitesse du véhicule électrique hybride, le moteur secondaire afin qu'il passe en mode d'ajustement de la puissance de génération, afin de permettre au moteur à combustion (1) de fonctionner dans une plage économique optimale prédéfinie,
dans lequel le moteur secondaire (5) est configuré pour démarrer le moteur à combustion (1), et
dans lequel, en mode d'ajustement de la puissance de génération, le moteur à combustion (1) est configuré pour actionner le moteur secondaire (5) afin qu'il génère de l'énergie sans participer à la propulsion, lorsque le véhicule roule à faible vitesse ;
dans lequel le module de commande est en outre configuré pour : une fois que le moteur secondaire est entré dans le mode d'ajustement de la puissance de génération, ajuster la puissance de génération du moteur secondaire selon la puissance requise par le véhicule électrique hybride et la puissance de charge de la batterie d'alimentation (3) ;
dans lequel une formule permettant d'ajuster la puissance de génération du moteur secondaire selon la puissance requise par le véhicule électrique hybride et la puissance de charge de la batterie d'alimentation (3) est la suivante : $P 1 = P 2 + P 3 , dans lequel P 2 = P 11 + P 21$
P1 est la puissance de génération du moteur secondaire, P2 est la puissance requise par le véhicule, P3 est la puissance de charge de la batterie d'alimentation (3), P11 est la puissance d'entraînement du véhicule, et P21 est la puissance des dispositifs électriques.

2. Système d'alimentation d'un véhicule électrique hybride selon la revendication 1, dans lequel le module de commande est configuré pour : lorsque la valeur SOC de la batterie d'alimentation (3) est supérieure à une valeur limite prédéfinie et inférieure ou égale à une première valeur prédéfinie, si la vitesse du véhicule électrique hybride est inférieure à une première vitesse prédéfinie, commander le moteur secondaire pour qu'il passe en mode d'ajustement de la puissance de l' de génération.

3. Système d'alimentation d'un véhicule électrique hybride selon la revendication 1 ou 2, dans lequel le module de commande est en outre configuré pour : lorsque la valeur SOC de la batterie d'alimentation (3) est supérieure à une valeur limite prédéfinie et est inférieure ou égale à une première valeur prédéfinie, et que la vitesse du véhicule électrique hybride est inférieure à une première vitesse prédéfinie, obtenir la puissance requise par le véhicule électrique hybride, et lorsque la puissance requise par le véhicule est inférieure ou égale à une puissance de génération maximale admissible du moteur secondaire, commander le moteur secondaire pour qu'il passe en mode d'ajustement de la puissance de génération.

4. Système d'alimentation d'un véhicule électrique hybride selon la revendication 3, dans lequel le module de commande est en outre configuré pour : lorsque la valeur SOC de la batterie d'alimentation (3) est supérieure à la valeur limite prédéfinie et inférieure ou égale à la première valeur prédéfinie, que la vitesse du véhicule électrique hybride est inférieure à la première vitesse prédéfinie, et que la puissance requise par le véhicule est inférieure ou égale à la puissance de génération maximale admissible du moteur secondaire, obtenir la course de la pédale d'accélérateur du véhicule électrique hybride et la résistance du véhicule électrique hybride, et lorsque la course de la pédale d'accélérateur est inférieure ou égale à une première course prédéfinie et que la résistance du véhicule électrique hybride est inférieure ou égale à une première résistance prédéfinie, commander le moteur secondaire pour qu'il passe en mode d'ajustement de la puissance de génération.

5. Système d'alimentation d'un véhicule électrique hybride selon l'une quelconque des revendications précédentes, dans lequel le module de commande est en outre configuré pour : obtenir un taux de variation de la valeur SOC de la batterie d'alimentation (3), et ajuster la puissance de génération du moteur secondaire selon une relation entre la puissance requise par le véhicule et une puissance de sortie minimale correspondant à une zone économique optimale du moteur (1) et le taux de variation de la valeur SOC de la batterie d'alimentation (3).

6. Système d'alimentation d'un véhicule électrique hybride selon la revendication 5, dans lequel le module de commande est en outre configuré pour : lorsque la puissance requise par le véhicule est inférieure à la puissance de sortie minimale correspondant à la plage de fonctionnement économique optimale du moteur (1), obtenir la puissance de charge de la batterie d'alimentation (3) selon le taux de variation de la valeur SOC de la batterie d'alimentation (3), et déterminer si la puissance de charge de la batterie d'alimentation (3) est inférieure à la différence entre la puissance de sortie minimale et la puissance requise par le véhicule, dans lequel
si la puissance de charge de la batterie d'alimentation (3) est inférieure à la différence entre la puissance de sortie minimale et la puissance requise par le véhicule, la puissance de génération du moteur secondaire est ajustée en commandant le moteur (1) de manière à ce qu'il génère une puissance égale à la puissance de sortie minimale ; ou
si la puissance de charge de la batterie d'alimentation (3) est supérieure ou égale à la différence entre la puissance de sortie minimale et la puissance requise par le véhicule, une puissance de sortie du moteur (1) comprise dans la plage économique optimale prédéfinie est obtenue selon la somme de la puissance de charge de la batterie d'alimentation (3) et de la puissance requise par le véhicule, et la puissance de génération du moteur secondaire est ajustée en commandant le moteur (1) pour qu'il génère de la puissance à la puissance de sortie obtenue ; ou
dans lequel le module de commande est en outre configuré pour : lorsque la puissance requise par le véhicule est supérieure ou égale à la puissance de sortie minimale correspondant à la plage économique optimale du moteur (1) et est inférieure ou égale à la puissance de génération maximale admissible du moteur secondaire, obtenir la puissance de charge de la batterie d'alimentation (3) selon le taux de variation de la valeur SOC de la batterie d'alimentation (3), obtenir une puissance de sortie du moteur (1) comprise dans la plage économique optimale prédéfinie selon la somme de la puissance de charge de la batterie d'alimentation (3) et de la puissance requise par le véhicule, et ajuster la puissance de génération du moteur secondaire en commandant le moteur (1) de manière à ce qu'il génère de la puissance à la valeur de sortie obtenue ; ou
dans lequel le module de commande est en outre configuré pour : lorsque la puissance requise par le véhicule est supérieure à la puissance de génération maximale admissible du moteur secondaire, commander en outre le moteur (1) pour qu'il participe à la propulsion afin de permettre au moteur (1) de transmettre de la puissance à la roue (7) par l'intermédiaire de l'embrayage (6).

7. Système d'alimentation d'un véhicule électrique hybride selon l'une quelconque des revendications précédentes, dans lequel le moteur à combustion (1) et le moteur électrique (2) entraînent conjointement une même roue (7) du véhicule électrique hybride ; ou
dans lequel la roue (7) du véhicule électrique hybride comprend une première roue (7) et une deuxième roue (7) ;
le moteur (1) est configuré pour transmettre de la puissance à la première roue (7) du véhicule électrique hybride par l'intermédiaire de l'embrayage (6) ; et
le moteur électrique (2) est configuré pour fournir une puissance d'entraînement à la deuxième roue (7) du véhicule électrique hybride.
